# EUROPÄISCHE PATENTSCHRIFT

(11) **EP 3 406 798 B1**
(45) Veröffentlichungstag und Bekanntmachung des Hinweises auf die Patenterteilung: **20.11.2019**
(21) Anmeldenummer: 18172044.2
(22) Anmeldetag: 14.05.2018
(51) Int. Cl.: E01C 23/088

(54) **AUSWECHSELBARE FRÄSWALZE**
REPLACEABLE MILLING ROLLER
ROULEAU DE FRAISAGE REMPLAÇABLE

(30) Priorität: 23.05.2017 DE 102017208780; 16.11.2017 DE 102017220518
(43) Veröffentlichungstag der Anmeldung: 28.11.2018
(73) Patentinhaber: Wirtgen GmbH, 53578 Windhagen (DE)
(72) Erfinder: Berning, Christian, 53909 Zülpich (DE); Buhr, Karsten, 56594 Willroth (DE); Frankemölle, Markus, 53773 Hennef (DE); Lehnert, Thomas, 56587 Oberraden (DE); Salz, Andreas, 53577 Neustadt (Wied) (DE); Wilhelmi, Hardy, 53547 Dattenberg (DE)
(74) Vertreter: Ruttensperger Lachnit Trossin Gomoll

(56) Entgegenhaltungen:
- DE-A1- 4 037 448
- DE-A1-102012 008 252
- US-A- 4 704 045
- US-A1- 2014 333 118

## Beschreibung

Die Erfindung betrifft eine auswechselbare Fräswalze für eine Bodenbearbeitungsmaschine gemäß dem Oberbegriff des Patentanspruchs 1.

DE 10 2012 008 252 A1 offenbart eine Fräswalze als Arbeitsvorrichtung, welche im Bereich ihres Sicherungsaxialendes durch eine in die Antriebsformation stirnseitig eingedrehte Gewindestange und eine mit dieser in Schraubeingriff stehenden Sicherungsmutter gesichert ist. Mit der Sicherungsmutter wird die Fräswalze der bekannten Bodenfräsmaschine axial gegen eine Verzahnung in einem dem Antriebsaxialende der Fräswalze näher gelegenen Bereich gedrückt. Durch die Verzahnung ist ein Antriebsdrehmoment von der Antriebsformation auf die Fräswalze übertragbar.

Die aus der DE 10 2012 008 252 A1 bekannte axiale Positionssicherung der Fräswalze relativ zur Antriebsformation ist hinsichtlich ihrer Sicherungswirkung nachteilig. Durch die Verwendung einer stirnseitig axial in die Antriebsformation eingedrehten Gewindestange und einer mit der Gewindestange in Schraubeingriff stehenden Sicherungsmutter ist beim Lösen der axialen Positionssicherung nicht vorhersagbar, an welcher Stelle die Schraubanordnung sich beim Ausüben eines lösenden Drehmoments (Lösemoments) zu lösen beginnt. Zum einen kann die Gewindestange zusammen mit der Sicherungsmutter als eine gemeinsam sich bewegende Schraubanordnung aus der Antriebsformation herausgedreht werden, zum anderen kann sich die Sicherungsmutter relativ zur Gewindestange bewegen, sodass die Gewindestange mit der Antriebsformation eine zur gemeinsamen Bewegung verbundene Anordnung bildet, relativ zu welcher die Sicherungsmutter bewegbar ist.

Schließlich kann abhängig von etwa schmutzbedingt unterschiedlichen Reibungsverhältnissen beim Ausüben eines Lösemoments sowohl die eine als auch die andere Situation eintreten, sodass also abschnittsweise die Gewindestange aus der Antriebsformation herausgedreht wird und abschnittsweise die Sicherungsmutter relativ zur Gewindestange bewegt wird. In jedem Fall führt die Ausübung eines lösenden Drehmoments zu einem nicht eindeutig vorhersagbaren Maschinenzustand.

Für ein anziehendes Drehmoment (Anzugsmoment) in einem Sicherungssinn kann mutatis mutandis das gleiche gelten, wenngleich hier im Gegensatz zum Lösen die Möglichkeit besteht, zeitlich erst die Gewindestange einzudrehen und erst anschließend die Sicherungsmutter aufzuschrauben.

Darüber hinaus ist aufgrund der Abmessungen der bekannten Sicherungsmutter das beim Anziehen und Lösen mit herkömmlichen Werkzeugen, wie etwa einem Drehmomentschlüssel, auf die Schraubanordnung der bekannten Fräswalze ausübbare Drehmoment begrenzt. Hierbei ist zu beachten, dass gerade bodenabtragende Arbeitsvorrichtungen während ihres bestimmungsgemäßen Betriebs sehr hohen Krafteinwirkungen ausgesetzt sind, denen eine axiale Positionssicherung widerstehen muss. Das sichere Herstellen und ebenso das sichere Lösen einer axialen Positionssicherung für eine Arbeitsvorrichtung einer Bodenbearbeitungsmaschine steht daher im Fokus der vorliegenden Anmeldung.

Es gibt ebenso ein Verfahren zum Herstellen oder Lösen einer axialen Positionssicherung einer Arbeitsvorrichtung einer Bodenbearbeitungsmaschine an einer Antriebsformation der Bodenbearbeitungsmaschine, insbesondere der oben genannten Bodenbearbeitungsmaschine. Die Antriebsformation ist dabei relativ zu einem Maschinenrahmen der Bodenbearbeitungsmaschine um eine Antriebsachse drehbar. Die Arbeitsvorrichtung umgibt die Antriebsformation radial außen, wobei die axiale Positionssicherung durch eine zentrale Schraubanordnung mit zur Antriebsachse kollinearer Schraubachse bewirkt ist.

Aufgrund der abhängig von der Bearbeitungsart sehr hohen möglichen auftretenden Reaktionskräfte, die bei der Bodenbearbeitung auf die Arbeitsvorrichtung rückwirken, ist zur Bereitstellung ausreichender Arbeitssicherheit die axiale Positionssicherung der Arbeitsvorrichtung an der Antriebsformation mit einem Anzugsdrehmoment von mehr als 2.500 Nm wünschenswert. Das Aufbringen eines solch hohen Sicherungsmoments an der Schraubanordnung der aus der DE 10 2012 008 252 A1 bekannten Bodenfräsmaschine ist umständlich und erfordert Werkzeuge, die üblicherweise nur in Werkstätten, nicht aber am Einsatzort der Maschine verfügbar sind.

Es ist daher Aufgabe der vorliegenden Erfindung, eine technische Lehre anzugeben, gemäß welcher die Arbeitsvorrichtung einfach und sicher mit hohem Anzugsdrehmoment durch die zentrale Schraubanordnung an der Antriebsformation in ihrer axialen Position sicherbar ist.

Diese Aufgabe wird gemäß der vorliegenden Erfindung durch eine auswechselbare Fräswalze als der Arbeitsvorrichtung mit allen Merkmalen des Anspruchs 1 gelöst.

Eine solche Fräswalze ermöglicht, dass das eingangs genannte Verfahren zusätzlich die folgenden Schritte umfasst:
- Abstützen eines relativ zur Antriebsformation schraubbaren Schraubbauteils der Schraubanordnung zur Verhinderung einer Drehbewegung des Schraubbauteils in einem Abstütz-Schraubsinn, und
- Antreiben der Antriebsformation zur Drehung in einem bezüglich des Abstütz-Schraubsinns gleichsinnigen Drehsinn.

Die Vorteile der erfindungsgemäßen Fräswalze werden nachfolgend am Beispiel einer Bodenbearbeitungsmaschine der eingangs genannten Art beschrieben und erläutert, welche zur Ausführung des oben genannten Verfahrens ausgebildet ist.

Konstruktiv kann die Ausbildung der Bodenbearbeitungsmaschine zur Ausführung des genannten Verfahrens dadurch realisiert sein, dass die Bodenbearbeitungsmaschine eine Schraubmoment-Abstützanordnung umfasst, welche mit einem relativ zur Antriebsformation schraubbeweglichen Schraubbauteil der Schraubanordnung Schraubmoment übertragend verbunden oder verbindbar ist und welche einen Abstützbereich aufweist, der in einem Abstütz-Schraubsinn zur Schraubmoment abstützenden Anlage an einem Gegenabstützbereich ausgebildet ist, wobei die Antriebsformation dazu ausgebildet ist, zur Drehung in einem zum Abstütz-Schraubsinn gleichsinnigen Drehsinn angetrieben zu werden, während der Abstützbereich sich in Anlage am Gegenabstützbereich befindet.

Ein Grundgedanke einer vorteilhaften Verwendung der auswechselbaren Fräswalze in der Bodenbearbeitungsmaschine ist die Nutzung der Antriebsformation, um an der zentralen Schraubanordnung ein ausreichend hohes Anzugsmoment bei der Herstellung einer axialen Positionssicherung oder/und ein ausreichend hohes Lösemoment beim Lösen der axialen Positionssicherung aufzubringen. Drehmomentquelle für ein auf die Schraubanordnung einwirkendes Anzugs- oder/und Lösemoment ist daher nicht wie bisher im Bereich von Bodenbearbeitungsmaschinen ein Drehmomentschlüssel oder ein Schlagschrauber in Gestalt eines mechanisierten Drehmomentschlüssels, welcher unmittelbar an der Schraubanordnung angreift, sondern ist dagegen die Antriebsformation bzw. eine mit der Antriebsformation in Drehmoment übertragender Verbindung stehende Antriebskraftquelle.

Die Schraubformation kann daher so ausreichend dimensioniert werden, dass sie als einzige Axial-Positionssicherung der Arbeitsvorrichtung verwendet werden kann. Daher sind Schraubmomente von 2.500 Nm und mehr in die Schraubformation einleitbar. Aufwändige und kompliziert zu bedienende, ein hohes Drehmoment einleitende Werkzeuge werden erfindungsgemäß nicht benötigt, da die Antriebsformation und ihre Antriebskraftquelle zum Aufbringen des Schraubmoments auf die Schraubformation verwendet werden.

Die Antriebsformation ragt im betriebsbereiten Zustand der Arbeitsvorrichtung axial bevorzugt nicht über deren Sicherungsaxialende hinaus, um die Arbeitsvorrichtung an ihrem Sicherungsaxialende möglichst nah an den Rand des übrigen Maschinenkörpers annähern zu können. Bevorzugt überragt die Arbeitsvorrichtung die Antriebsformation axial zu wenigstens einer Seite, etwa mit ihrem Sicherungsaxialende. Besonders bevorzugt überragt die Arbeitsvorrichtung die Antriebsformation axial zu beiden Seiten.

Sofern im Einzelfall nichts Abweichendes ausgesagt ist, beschreibt die vorliegende Anmeldung die Bodenbearbeitungsmaschine in einem für eine bestimmungsgemäße Bodenbearbeitung bereiten Zustand.

Wenngleich im Rahmen der vorliegenden Anmeldung bevorzugt ist, dass die zentrale Schraubanordnung die axiale Positionssicherung ausschließlich bewirkt, soll ein "Bewirken" einer axialen Positionssicherung durch die zentrale Schraubanordnung bereits dann erfüllt sein, wenn die zentrale Schraubanordnung zur axialen Positionssicherung beiträgt. Es soll daher nicht ausgeschlossen sein, dass zusätzlich zur zentralen Schraubanordnung nicht noch eine oder mehrere weitere Sicherungsmaßnahmen realisiert sind.

Weiter sei bereits an dieser Stelle klargestellt, dass für die in der vorliegenden Anmeldung gebrauchten Angaben "axial" und "radial", sofern nichts Abweichendes angegeben ist, die Antriebsachse der Antriebsformation Bezugsgröße ist. Eine zur Antriebsachse parallele Richtung ist daher eine axiale Richtung und eine zu dieser orthogonal verlaufende Richtung ist eine radiale Richtung.

In der vorliegenden Anmeldung ist von "Antriebsdrehmoment" und von "Schraubmoment" die Rede. Diese Begriffsverwendung dient lediglich der besseren Unterscheidung von Drehmomenten hinsichtlich ihres jeweils betrachteten Wirkungsortes. Die unterschiedlichen Begriffe sind vor allem dort verwendet, wo im Text antriebsseitig in die Antriebsformation eingeleitete Antriebsdrehmomente und an der Schraubformation auftretende Schraubmomente nahe beieinander genannt sind. Es handelt sich dabei stets um Drehmomente. Ein Wesensunterschied besteht zwischen den derart unterschiedlich bezeichneten Drehmomenten nicht. So kann und wird erfindungsgemäß ein abgestütztes Schraubmoment als Reaktion auf ein antriebsseitig eingeleitetes Antriebsdrehmoment auftreten.

Der Maschinenrahmen als Grundbaueinheit der Bodenbearbeitungsmaschine bildet eine Art Basisbezugssystem der Maschine. Der Maschinenkörper umfasst den Maschinenrahmen und mit diesem verbundene, auch beweglich verbundene weitere Maschinenteile.

Üblicherweise ist die Antriebsformation mit einem Antriebsmotor der Bodenbearbeitungsmaschine gekoppelt, wobei der Antriebsmotor jedoch in der Regel eine höhere Drehzahl aufweist als die an der Antriebsformation bei bestimmungsgemäßer Bodenbearbeitung benötigte Drehzahl. Daher befindet sich in Wirkverbindung mit der Antriebsformation üblicherweise ein Drehzahl untersetzendes und somit Drehmoment übersetzendes Getriebe. Bevorzugt umfasst die Antriebsformation einen Teil des Getriebegehäuses des Getriebes und ist besonders bevorzugt mit einem Hohlrad des Getriebes zur gemeinsamen Drehung gekoppelt, wenn das Getriebe bauraumsparend als Planetengetriebe ausgebildet ist. Dieses Getriebe kann in vorteilhafter Weise ausgenutzt werden, um ein antriebsseitig zur Antriebsformation übertragenes Antriebsdrehmoment zu verstärken und somit mit einem verhältnismäßig geringen vom Antriebsmotor oder einem gesondert von diesem ausgebildeten Drehantrieb - auch manuellen Drehantrieb - ausgegebenen Antriebsdrehmoment durch die bewirkte Drehmomentübersetzung am Ort der Schraubanordnung ein um das Übersetzungsverhältnis vervielfachtes Anzugs- oder/und Lösemoment als Schraubmoment zu bewirken. Hierzu muss lediglich das relativ zur Antriebsformation schraubbewegliche Schraubbauteil der Schraubanordnung abgestützt werden, um ein Mitdrehen desselben mit der angetriebenen Antriebsformation zu verhindern.

Es ist üblicherweise vorrichtungsmäßig wesentlich einfacher, ein vorgegebenes hohes Schraubmoment an einer Schraubanordnung lediglich abzustützen, als an der Schraubanordnung ein gleich hohes Schraubmoment durch eine Bedienperson aktiv einzuleiten.

Es sei an dieser Stelle klargestellt, dass in der vorliegenden Anmeldung erläuterte Weiterbildungen der Bodenbearbeitungsmaschine auch als Weiterbildungen des Verfahrens zu verstehen sind und umgekehrt.

Der Gegenabstützbereich, an welchem sich die Schraubmoment-Abstützanordnung während der Ausübung eines Anzugs- oder eines Lösemoments abstützt, kann jeder beliebige Bereich sein, welcher relativ zum Maschinenkörper ruht. Da die Bodenbearbeitungsmaschine, die in an sich bekannter Weise vorteilhaft selbstfahrend ist, während des Herstellens oder des Lösens der axialen Positionssicherung der Arbeitsvorrichtung relativ zum Aufstands-Untergrund stillsteht, auf welchem die Bodenbearbeitungsmaschine gerade aufsteht, kann der Gegenabstützbereich auch von einem Bereich des Untergrunds gebildet sein.

Da jedoch die Beschaffenheit des die Bodenbearbeitungsmaschine tragenden Untergrunds je nach Einsatzgebiet der Bodenbearbeitungsmaschine sehr unterschiedlich beschaffen sein kann und somit auch für eine Schraubmoment abstützende Anlage des Abstützbereichs der Schraubmoment-Abstützanordnung ungeeignet sein kann, etwa weil er zu weich ist, ist der Gegenabstützbereich bevorzugt am Maschinenkörper vorgesehen.

Die Schraubmoment-Abstützanordnung kann beispielsweise unlösbar mit dem Schraubbauteil verbunden sein. Sie kann etwa einstückig mit dem Schraubbauteil ausgebildet sein. In diesem Fall ist es notwendig, den Gegenabstützbereich lösbar am Maschinenkörper vorzusehen, sodass er nur dann am Maschinenkörper angeordnet ist, wenn er tatsächlich zur Abstützung eines durch die Antriebsformation ausgeübten Anzugs- oder Lösemoments benötigt wird. Da die Arbeitsvorrichtung während ihres bestimmungsgemäßen Bodenbearbeitungsbetriebs relativ zum Maschinenrahmen drehen können muss, ohne die Positionssicherung der Arbeitsvorrichtung durch die Schraubanordnung zu beeinflussen, könnte ein Vorsehen des Gegenabstützbereichs am Maschinenkörper zeitlich außerhalb der Herstellung oder der Lösung der axialen Positionssicherung betriebsbeeinträchtigend sein.

Eine Verbindung ist im Sinne dieser Anmeldung dann lösbar, wenn sie ohne Zerstörung von zur Verbindung beitragenden Bauteilen lösbar ist. Eine Verschraubung oder eine Verrastung oder eine Klemmung oder ein Bajonett-Formschluss sind Beispiele für lösbare Verbindungen.

Gemäß einer bevorzugten Weiterbildung kann die Bodenbearbeitungsmaschine einen oder mehrere Sensoren aufweisen, welche die Position der Schraubmoment-Abstützanordnung oder/und des Gegenabstützbereichs in einer Verstauungsposition an der Maschine oder/und die Position der Schraubmoment-Abstützanordnung oder/und des Gegenabstützbereichs in einer abstützbereiten Stellung und dergleichen abfragen. Eine Maschinensteuerung der Bodenbearbeitungsmaschine ist vorzugsweise mit dem wenigstens einen Sensor verbunden und ist derart konfiguriert, einen bestimmungsgemäßen Bodenbearbeitungsbetrieb der Maschine nur dann zuzulassen, wenn das oder die von dem wenigstens einen Sensor übertragene Erfassungssignale anzeigen, dass eine Kollision zwischen der Schraubmoment-Abstützanordnung und dem Gegenabstützbereich ausgeschlossen ist.

Zeigt das wenigstens eine Sensorsignal dagegen eine Kollisionsgefahr an, kann die maximal vom Antriebsmotor ausgebbare Leistung auf einen gegenüber der Nennleistung im Bodenbearbeitungsbetrieb reduzierten Wert begrenzt sein oder es kann der Antriebsmotor stillgelegt sein und die Einleitung von Drehmoment in die Antriebsvorrichtung kann auf einen gesondert vom Antriebsmotor ausgebildeten Drehantrieb, auch mechanischen Drehantrieb, begrenzt sein.

Der Gegenabstützbereich ist bevorzugt an einem Gegenabstützbauteil realisiert. Selbst wenn die Schraubmoment-Abstützanordnung nicht dauerhaft mit dem Schraubbauteil verbunden, sondern mit diesem bedarfsweise verbindbar ist, kann ein solches Gegenabstützbauteil zu Reparatur-, Wartungs- und Austauschzwecken lösbar mit dem Maschinenrahmen oder mit dem übrigen Maschinenkörper verbunden sein. Wegen der lösbaren Verbindbarkeit der Schraubmoment-Abstützanordnung mit dem Schraubbauteil kann das Gegenabstützbauteil zur Verringerung des Montageaufwands jedoch auch während bestimmungsgemäßer Betriebsphasen der Bodenbearbeitungsmaschine am Maschinenkörper vorgesehen oder/und mit diesem verbunden sein.

In vielen Fällen ist an der Bodenbearbeitungsmaschine aus Gründen der Arbeitssicherheit mit Abstand vom Sicherungsaxialende in Richtung vom Antriebsaxialende weg ein Verkleidungsbauteil gegenüberliegend angeordnet, sodass in Phasen bestimmungsgemäßen Bodenbearbeitungsbetriebs die Arbeitsvorrichtung in axialer Richtung nicht zugänglich ist. Da die Schraubanordnung sich bevorzugt näher am Sicherungsaxialende als am Antriebsaxialende der Arbeitsvorrichtung befindet, kann der Gegenabstützbereich in einfacher und vorteilhafter Weise an einem solchen Verkleidungsbauteil vorgesehen sein, etwa in Gestalt des Gegenabstützbauteils, beispielsweise zur Bereitstellung ausreichender Festigkeit als Stahlblechbauteil, welches mit dem Verkleidungsbauteil verbunden ist. Das Gegenabstützbauteil kann bevorzugt eine Durchgangsöffnung aufweisen, durch welche hindurch wenigstens das Schraubbauteil der Schraubanordnung zugänglich ist.

Im bevorzugten Fall einer Fräswalze oder eines Fräsrotors als der Arbeitsvorrichtung befindet sich diese in an sich bekannter Weise üblicherweise in einem Fräswalzenkasten, welcher die Arbeitsvorrichtung nicht nur stirnseitig, sondern auch in und entgegen der Maschinenlängsrichtung der Bodenbearbeitungsmaschine abschirmt. Das genannte Verkleidungsbauteil kann Teil eines solchen Fräswalzenkastens sein. Es kann relativ zum Maschinenrahmen sowie zum übrigen Maschinenkörper beweglich sein, etwa abnehmbar oder schwenkbeweglich mit dem Maschinenrahmen verbunden sein, um nach Lösen der Schraubanordnung einen schnellen und einfachen Wechsel der Arbeitsvorrichtung zu ermöglichen. In der Regel werden zum Wechsel der Arbeitsvorrichtung die Arbeitsvorrichtung und der Maschinenkörper axial auseinander oder aufeinander zu bewegt.

Gemäß einer vorteilhaften Weiterbildung ist das Verkleidungsbauteil schwenkbeweglich mit dem Maschinenrahmen verbunden, wobei ein die Arbeitsvorrichtung zur Drehung um die Antriebsachse lagerndes Loslager zur gemeinsamen Bewegung mit dem Verkleidungsbauteil verbunden ist. Somit kann mit der Schwenkbewegung des Verkleidungsbauteils von einer Schließstellung, in welcher das Verkleidungsbauteil die Arbeitsvorrichtung oder/und die Antriebsformation gegen einen Zugang von außen abschirmt, in eine Zugangsstellung, in welcher die Arbeitsvorrichtung oder/und die Antriebsformation axial zugänglich sind, das Loslager von einer entsprechenden Lagerformation der Arbeitsvorrichtung oder der Antriebsformation abgezogen werden.

Das Loslager wird als "Loslager" bezeichnet, da es eine Lagerformation der Arbeitsvorrichtung oder der Antriebsformation zwar um die Antriebsdrehachse drehbar, jedoch längs der Antriebsdrehachse verlagerbar lagert. So ist eine, beispielsweise thermisch bedingte, Längenänderung der an der Loslagerung beteiligten Lagerbauteile: Loslager und Lagerformation, und/oder der gelagerten Bauteile möglich, ohne dass diese zu übermäßig hohen mechanischen Spannungen in den beteiligten Bauteilen führt. Das Loslager befindet sich im betriebsbereiten Zustand der Bodenbearbeitungsmaschine in der Regel axial näher am Sicherungsaxialende der Arbeitsvorrichtung als an deren Antriebsaxialende. Dem Antriebsaxialende näher gelegen als dem Sicherungsaxialende ist üblicherweise ein zur Drehlagerung der Arbeitsvorrichtung und in der Regel ebenso der Antriebsformation um die Antriebsachse vorgesehenes Festlager, welches - mit Ausnahme eines um die Antriebsachse drehbaren Festlagerbauteils - relativ zum Maschinenrahmen unbeweglich am Maschinenrahmen vorgesehen ist.

Aus der DE 40 37 448 A1 ist bekannt, das Loslager gemeinsam mit einem flächigen Verkleidungsbauteil, welches Teil eines Fräswalzenkastens ist, translatorisch längs der Antriebsachse von der Arbeitsvorrichtung in Gestalt einer Fräswalze weg oder zu dieser hin zu bewegen. Hierzu ist es allerdings notwendig, dass Verkleidungsbauteil vollständig vom Maschinenrahmen zu entfernen, was einen erheblichen Montageaufwand bedeutet.

Vorteilhafter ist es gemäß einer Weiterbildung, das Verkleidungsbauteil schwenkbeweglich am Maschinenrahmen vorzusehen. So kann das zur gemeinsamen Schwenkbewegung mit dem Verkleidungsbauteil verbundene Loslager durch eine Schwenkbewegung des Verkleidungsbauteils - je nach Schwenksinn - von der Lagerformation der Arbeitsvorrichtung oder der Antriebsformation abgezogen oder/und auf die Lagerformation aufgeschoben werden. Denn das schwenkbar am Maschinenrahmen angelenkte Verkleidungsbauteil kann unverlierbar mit dem Maschinenrahmen verbunden bleiben und so wiederholgenau eine Abzugbewegung des Loslagers von der oben bezeichneten Lagerformation oder eine Aufschubbewegung auf eine solche Lagerformation führen.

Die erfindungsgemäße auswechselbare Fräswalze ermöglicht das im vorhergehenden Absatz beschriebene Abziehen oder Aufschieben des Loslagers von der bzw. auf die Lagerformation.

Die erfindungsgemäße auswechselbare Fräswalze ermöglicht eine schnelle, einfache und genaue Zentrierung der Fräswalze an der Bodenbearbeitungsmaschine. Unabhängig von der oben beschriebenen vorteilhaften Weiterbildung der vorliegenden Erfindung verleiht die gemeinsame Schwenkbewegung des Loslagers der Arbeitsvorrichtung mit dem schwenkbeweglich am Maschinenrahmen vorgesehenen Verkleidungsbauteil einer Bodenbearbeitungsmaschine wegen der dadurch erheblich vereinfachten Möglichkeit zum Einbau und Ausbau der Arbeitsvorrichtung in den bzw. von dem Maschinenkörper einen besonderen Wert. Deshalb betrifft die vorliegende Anmeldung auch eine Bodenbearbeitungsmaschine, wie etwa eine Straßenfräse, einen Recycler, einen Stabilisierer oder einen Surface-Miner und dergleichen, umfassend einen Maschinenkörper mit einem Maschinenrahmen und einer relativ zum Maschinenrahmen um eine - eine axiale Richtung definierende - Antriebsachse zur Drehung antreibbaren Antriebsformation, wobei die Bodenbearbeitungsmaschine eine Arbeitsvorrichtung für eine Bodenbearbeitung umfasst, mit welcher die Antriebsformation ein Antriebsdrehmoment übertragend zur gemeinsamen Drehung lösbar verbunden ist, wobei sich die Arbeitsvorrichtung axial zwischen einem Antriebsaxialende und einem dem Antriebsaxialende entgegengesetzten Sicherungsaxialende erstreckt und die Antriebsformation der Bodenbearbeitungsmaschine radial außen umgibt, wobei dem Sicherungsaxialende in betriebsbereitem Zustand der Bodenbearbeitungsmaschine mit Abstand vom Sicherungsaxialende in Richtung vom Antriebsaxialende weg ein Verkleidungsbauteil gegenüberliegend angeordnet ist, welches schwenkbeweglich mit dem Maschinenrahmen verbunden ist und welches ein die Arbeitsvorrichtung zur Drehung um die Antriebsachse lagerndes Loslager trägt, das zur gemeinsamen Schwenkbewegung mit dem Verkleidungsbauteil verbunden ist.

Das Loslager kann dabei die Arbeitsvorrichtung unmittelbar oder mittelbar über die Antriebsformation zur Drehung um die Antriebsachse lagern.

Die Arbeitsvorrichtung dieser Bodenbearbeitungsmaschine kann gemäß einer bevorzugten Weiterbildung zur Erzielung der weiter oben genannten Vorteile durch eine im Bereich ihres Sicherungsaxialendes zugängliche zentrale Schraubanordnung mit zur Antriebsachse kollinearer Schraubachse an der Antriebsformation gegen eine axiale Verlagerung relativ zur Antriebsformation gesichert sein.

Die nachfolgend beschriebenen vorteilhaften Weiterbildungen betreffen alle in der vorliegenden Anmeldung beschriebenen Bodenbearbeitungsmaschinen.

Das Loslager weist bevorzugt eine Ausnehmung auf, in welche ein Lagerzapfen als die Lagerformation der Antriebsformation oder der Arbeitsvorrichtung im betriebsbereiten Zustand der Bodenbearbeitungsmaschine einragt. Der Lagerzapfen ist bevorzugt in einem dem Sicherungsaxialende der Arbeitsvorrichtung näher als dem Antriebsaxialende gelegenen Bereich vorgesehen und erstreckt sich in axialer Richtung in Richtung vom Antriebsaxialende weg. Bevorzugt kragt der Lagerzapfen von einer ihn tragenden Auskragstruktur axial aus. Die Auskragstruktur kann dann, wenn der Lagerzapfen zur gemeinsamen Bewegung mit der Arbeitsvorrichtung verbunden ist, beispielsweise eine Flanschformation sein, über welche ein den Lagerzapfen aufweisendes Bauteil mit der Arbeitsvorrichtung verbunden ist, vorzugsweise lösbar verbunden ist. Die Auskragstruktur kann alternativ dann, wenn der Lagerzapfen zur gemeinsamen Bewegung mit der Antriebsformation verbunden ist, eine Stirnplatte der Antriebsformation sein, von welcher ausgehend der Lagerzapfen einen Verbindungsflansch der der Arbeitsvorrichtung längs der Antriebsachse zentrierend durchsetzt.

Da das Loslager einerseits den Lagerzapfen axial verlagerbar zur Drehung um die Antriebsachse lagert, andererseits jedoch durch eine von der Antriebsdrehachse abweichende, weil einer gekrümmten Trajektorie folgende, Schwenkbewegung auf den Lagerzapfen aufgeschoben oder von diesem abgezogen werden soll, stimmen die konstruktiv bedingte Relativbeweglichkeit von Lagerzapfen und Loslager und die tatsächliche Relativbewegung von Lagerzapfen und Loslager beim Aufschieben und Abziehen nicht überein. Hieraus resultiert beim Aufschieben und Abziehen des Loslagers auf den bzw. von dem Lagerzapfen ein Risiko einer unerwünschten Kollision von Lagerzapfen und Loslager.

Zur Erzielung einer kollisionsfreien oder wenigstens kollisionsarmen Schwenkbewegung des Loslagers gemeinsam mit dem Verkleidungsbauteil ist der Lagerzapfen vorzugsweise sich axial in Richtung vom Antriebsaxialende weg verjüngend ausgebildet. Zusätzlich oder alternativ ist die Ausnehmung des Loslagers sich axial in Richtung zur Arbeitsvorrichtung hin aufweitend ausgebildet.

Zur möglichst stabilen Lagerung des Lagerzapfens am Loslager weist der Lagerzapfen in axialem Abstand voneinander bevorzugt wenigstens zwei, besonders bevorzugt genau zwei, zylindrische Lagerflächen auf, welche im betriebsbereiten Zustand der Bodenbearbeitungsmaschine von hohlzylindrischen Gegenlagerflächen des Loslagers spielfrei umgeben sind. Bevorzugt weist die axial weiter von der Auskragstruktur entfernt gelegene zylindrische Lagerfläche zur Erleichterung eines Aufschiebens bzw. Aufschwenkens des Loslagers auf den Lagerzapfen durch Schwenkbewegung des Loslagers einen kleineren Durchmesser auf als die der Auskragstruktur axial näher gelegene zylindrische Lagerfläche. Für die hohlzylindrischen Gegenlagerflächen des Loslagers, welche die zylindrischen Lagerflächen des Lagerzapfens im betriebsbereiten Zustand der Bodenbearbeitungsmaschine berührend umgeben, gilt das zu den zylindrischen Lagerflächen Gesagte mutatis mutandis entsprechend.

Eine besonders vorteilhafte Ausgestaltung des Lagerzapfens, die eine mit der gemeinsamen Schwenkbewegung von Loslager und Verkleidungsbauteil einhergehende Abzug- und Aufschubbewegung des Loslagers von dem Lagerzapfen bzw. auf diesen besonders kollisionsarm ermöglicht, soll nachfolgend anhand von fiktiven Konussen erläutert werden, die Abschnitte des Lagerzapfens einhüllend umgeben. Gemäß einer bevorzugten Ausführungsform ist die sich axial verjüngende Ausbildung des Lagerzapfens dergestalt, dass der Öffnungswinkel von zwei fiktiven einhüllenden Konussen, welche jeweils an zwei mit axialem Abstand voneinander gelegenen Schmiegekreisen auf der Oberfläche des Lagerzapfens tangential anliegen und einen zwischen den Schmiegekreisen gelegenen Axialabschnitt des Lagerzapfens umgeben, für Konusse von näher an der Auskragstruktur gelegenen Schmiegekreispaaren kleiner ist. Die Schmiegekreise liegen jeweils an der radial äußeren Oberfläche des Lagerzapfens.

Konstruktiv kann in Konkretisierung einer vorteilhaften Weiterbildung der vorliegenden Erfindung der Lagerzapfen eine auskragstrukturfernere, durchmesserkleinere erste zylindrische Lagerfläche und eine auskragstrukturnähere, durchmessergrößere zweiten zylindrische Lagerfläche aufweisen.

Es sei ein erster fiktiver einhüllender Konus angenommen, dessen erster, von der Auskragstruktur weiter entfernt gelegener Schmiegekreis an dem von der Auskragstruktur entfernt gelegenen freien axialen Längsende gelegen ist und dessen zweiter, der Auskragstruktur näher gelegener Schmiegekreis axial zwischen dem ersten Schmiegekreis und dem dem freien Lagerzapfen-Längsende näher gelegenen axialen Längsende der ersten zylindrischen Lagerfläche gelegen ist. Das letztgenannte Längsende ist ausdrücklich Teil des von ihm begrenzten Axialbereichs und kann deshalb Ort des zweiten Schmiegekreises sein.

Es sei weiter ein zweiter fiktiver einhüllender Konus angenommen, dessen erster, von der Auskragstruktur weiter entfernt gelegener Schmiegekreis an dem dem freien Lagerzapfen-Längsende näher gelegenen axialen Längsende der ersten zylindrischen Lagerfläche gelegen ist. An diesem charakteristischen ersten Schmiegekreis als Beginn des zweiten fiktiven Konus kann der zweite fiktive Konus tangential an der Außenoberfläche des Lagerzapfens anliegen, muss dies jedoch nicht. Der zweite Schmiegekreis des zweiten fiktiven Konus liegt axial zwischen dessen erstem Schmiegekreis und dem dem freien Lagerzapfen-Längsende näher gelegenen axialen Längsende, einschließlich dieses Längsendes, der zweiten zylindrischen Lagerfläche. Mit Ausnahme des ersten Schmiegekreis des zweiten fiktiven Konus liegen die beiden fiktiven Konusse an allen Schmiegekreisen tangential an der Außenoberfläche des Lagerzapfens an.

Unter den oben genannten Bedingungen ist der Lagerzapfen dann für eine kollisionsarme Aufschub- und Abzugbewegung des Loslagers ausgebildet, wenn der erste fiktive Konus einen größeren Öffnungswinkel aufweist als der zweite fiktive Konus.

Zu beachten sind folgende Ausnahmefälle: weist das freie Längsende des Lagerzapfens eine Fase auf, ist die der Auskragstruktur axial nähergelegene Fasenkante als erster Schmiegekreis des ersten fiktiven Konus heranzuziehen. Ist die der Auskragstruktur axial nähergelegene Fasenkante selbst das dem freien Lagerzapfen-Längsende näher gelegene axiale Längsende der ersten zylindrischen Lagerfläche, dann bildet der Konus der Fase den ersten fiktiven Konus. Der Fasenwinkel ist dann dessen Öffnungswinkel.

Vorzugsweise beträgt der Öffnungswinkel des ersten fiktiven Konus wenigstens das 1,5-fache des Öffnungswinkels des zweiten fiktiven Konus, besonders bevorzugt wenigstens das 2,5-fache. Ebenso bevorzugt beträgt der Öffnungswinkel des zweiten fiktiven Konus 5° bis 15°, besonders bevorzugt 8° bis 13°.

Ein verhältnismäßig großer Öffnungswinkel des ersten fiktiven Konus gestattet ein Einfangen des freien Lagerzapfen-Längsendes, selbst wenn die Lage der Längsachse des Lagerzapfens bei abgezogenem Loslager aufgrund des Eigengewichts der Arbeitsvorrichtung und/oder der Antriebsformation stark von der idealen Lage der Antriebsachse abweicht.

Der verglichen mit dem Öffnungswinkel des ersten fiktiven Konus kleinere Öffnungswinkel des zweiten fiktiven Konus ermöglicht nach dem Einfangen des freien Lagerzapfen-Längsendes ein Aufgleiten des Loslagers auf den Lagerzapfen im Zuge der Schwenkbewegung des Loslagers relativ zum Lagerzapfen.

Grundsätzlich kann die Antriebsachse beliebig am Maschinenkörper orientiert sein, bevorzugt ist sie parallel zum Aufstands-Untergrund orientiert, um über die axiale Erstreckung der Arbeitsvorrichtung hinweg einen homogenen Bearbeitungseingriff der Arbeitsvorrichtung mit dem Boden bewirken zu können. Bevorzugt ist die Antriebsachse in Maschinenquerrichtung der Bearbeitungsmaschine orientiert, um durch einen Fahrantrieb der Bodenbearbeitungsmaschine relativ zum Boden einen Vortrieb der Arbeitsvorrichtung orthogonal zur Antriebsachse bewirken zu können.

Eine ebenso einfache wie wirksame Schraubmomentabstützung kann durch einen Formschlusseingriff zwischen Abstützbereich und Gegenabstützbereich realisiert werden. Theoretisch ist zwar auch ein Reibschluss denkbar, jedoch ist wegen der oben genannten hohen Anzugs- und Lösemomente eine formschlüssige Abstützung bevorzugt. Hierzu kann konkret vorgesehen sein, dass ein Bereich aus Abstützbereich und Gegenabstützbereich wenigstens einen Vorsprung aufweist, und dass der jeweils andere Bereich aus Abstützbereich und Gegenabstützbereich wenigstens eine Ausnehmung aufweist, in welche der Vorsprung einragt.

Da der Gegenabstützbereich aufgrund des verfügbaren Bauraums vorteilhaft so angeordnet werden kann, dass er das Schraubbauteil radial außen umgibt oder bei axialem Versatz zu diesem wenigstens radial außerhalb der, gegebenenfalls axial verlängert gedachten, Radialerstreckung des Schraubbauteils vorgesehen ist, sind bevorzugt der Vorsprung am Abstützbereich und die Ausnehmung am Gegenabstützbereich ausgebildet. Da in der Regel aus den oben genannten Gründen eine dauerhafte Anordnung sowohl des Abstützbereichs als auch des Gegenabstützbereichs an der Bodenbearbeitungsmaschine für den Betrieb der Bodenbearbeitungsmaschine unvorteilhaft ist, ist, wie oben bereits im Zusammenhang mit dem Gegenabstützbereich ausgeführt, einer der beiden Bereiche nach dem Herstellen oder Lösen der axialen Positionssicherung von der Bodenbearbeitungsmaschine entfernbar. Um das Anordnen oder/und das Entfernen von Abstützbereich und Gegenabstützbereich relativ zueinander an der Bodenbearbeitungsmaschine zu erleichtern, ist vorzugsweise die Ausnehmung größer ausgebildet als der Vorsprung, sodass es für die Anordnung eines Bereichs oder beider Bereiche an der Bodenbearbeitungsmaschine auf eine exakte Relativdrehstellung der Antriebsformation relativ zum Maschinenrahmen nicht ankommt. Bevorzugt ist die Ausnehmung bezogen auf die verlängert gedachte Antriebsachse eine Radialausnehmung, welche sich über einen größeren Winkelbereich in Umfangsrichtung um die Antriebsachse erstreckt als der mit ihr zusammenwirkende Vorsprung.

Das Schraubbauteil kann eine Mutter oder kann eine Schraube sein. Die Schraubmoment-Abstützanordnung kann dann, wie oben bereits angedeutet, einstückig mit dem Schraubbauteil ausgeführt sein, beispielsweise wenn von dem Schraubbauteil, etwa der Mutter oder dem Schraubenkopf, wenigstens ein Vorsprung radial oder/und axial vorsteht, wie es beispielsweise von Flügelmuttern und Flügelschrauben bekannt ist. Dieser Vorsprung ist dann mit einer die Ausnehmung des Gegenabstützbereichs begrenzenden Kontur in Anlageeingriff bringbar.

Die dann erforderliche Montage und Demontage des Gegenabstützbereichs kann jedoch einen unerwünschten Montageaufwand bedeuten. Bevorzugt ist daher, dass die Schraubmoment-Abstützanordnung als vom Maschinenkörper und von der Schraubanordnung gesonderte Werkzeuganordnung ausgebildet ist, mit einem Eingriffsbereich, welcher zum lösbaren, Drehmoment übertragenden Eingriff mit einem Gegeneingriffsbereich des Schraubbauteils ausgebildet ist.

Dementsprechend kann das oben genannte Verfahren dadurch weitergebildet sein, dass der Schritt des Abstützens folgende Unterschritte umfasst:
- Verbinden eines Eingriffsbereichs einer gesondert vom Maschinenkörper ausgebildeten Schraubmoment-Abstützanordnung mit einem Gegeneingriffsbereich des Schraubbauteils zur Drehmomentübertragung zwischen Schraubmoment-Abstützanordnung und Schraubbauteil und
- Anordnen eines Abstützbereichs der Schraubmoment-Abstützanordnung zur Schraubmoment abstützenden Anlage an einem Gegenabstützbereich, vorzugsweise an einem Gegenabstützbereich am Maschinenkörper.

Wenngleich der Gegeneingriffsbereich des Schraubbauteils eine beliebige Gestalt aufweisen kann, ist es vorteilhaft, eine an Schraubbauteilen üblicherweise ohnehin vorhandene Werkzeugangriffsformation, beispielsweise eine Polyederformation, wie etwa eine bekannte Außen- oder Innensechskantformation und dergleichen, als Gegeneingriffsbereich zu nutzen. Der Vorteil der gesonderten Ausbildung der Schraubmoment-Abstützanordnung liegt darin, dass sie in diesem Falle mit verhältnismäßig geringem Bauvolumen ausgebildet und bei Nicht-Gebrauch an der Bodenbearbeitungsmaschine verstaut mitgeführt werden kann. Beispielsweise kann die Schraubmoment-Abstützanordnung mit ihrem Eingriffsbereich axial auf wenigstens einen Abschnitt des Schraubbauteils aufgeschoben und von diesem wieder abgezogen werden, etwa in der Art eines Überwurfwerkzeugs, wie man es von Steckschlüsseln (sogenannten "Nüssen") kennt. Bevorzugt ist daher der Eingriffsbereich als Überwurf-Eingriffsbereich an der Schraubmoment-Abstützanordnung ausgebildet, welcher besonders bevorzugt bei hergestelltem Eingriff den Gegeneingriffsbereich in Umfangsrichtung um die Antriebsachse geschlossen umgibt.

Dann kann gemäß einer vorteilhaften Weiterbildung der Erfindung vorgesehen sein, dass - bei Betrachtung der Schraubmoment-Abstützanordnung bei zwischen Eingriffsbereich und Gegeneingriffsbereich hergestelltem Eingriff - der wenigstens eine Vorsprung vom einem den Eingriffsbereich aufweisenden Eingriffsabschnitt der Schraubmoment-Abstützanordnung radial vorsteht.

Im Drehmoment-Übertragungspfad zwischen dem Abstützbereich und dem Eingriffsbereich kann zur Überwachung des auf die Schraubanordnung ausgeübten Schraubmoments eine Prüfvorrichtung vorgesehen sein, welche dazu ausgebildet ist, ein zwischen dem Abstützbereich und dem Eingriffsbereich wirkendes Drehmoment dem Betrage nach zu überprüfen. Dabei reicht es aus, wenn die Prüfvorrichtung dazu ausgebildet ist, ein Erreichen eines vorbestimmten oder vorbestimmbaren Nenn-Schraubmoments bzw. eines vorbestimmten oder vorbestimmbaren Nenn-Abstützmoments zu überprüfen. Die Prüfvorrichtung kann daher eine lastabhängig wirkende Drehmoment übertragende Verbindung zwischen dem Abstützbereich und dem Eingriffsbereich sein, also etwa zwischen dem wenigstens einen Vorsprung und dem Eingriffsabschnitt. So kann die Prüfvorrichtung eine lastabhängig wirkende Kupplung sein, etwa eine Rutschkupplung, welche bis zum vorbestimmten oder vorbestimmbaren Grenzwert ein Drehmoment überträgt und bei Ausübung eines höheren Drehmoments als dem Grenz-Drehmoment die Drehmoment übertragende Verbindung zwischen dem Abstützbereich und dem Eingriffsbereich trennt, etwa durch Durchrutschen.

Zusätzlich oder alternativ kann die Prüfvorrichtung dazu ausgebildet sein, bei Erreichen des vorbestimmten oder vorbestimmbaren Grenz-Schraub- bzw. Grenz-Abstützmoments ein Signal abzugeben, bevorzugt ein von Drehmomentschlüsseln bereits bekanntes "Klacken". Dann, wenn das Grenzmoment der Prüfvorrichtung mit dem gewünschten Nenn-Schraubmoment übereinstimmt oder zu diesem in einer gewünschten Beziehung steht, kann so an der Schraubmoment-Abstützanordnung mit einfachen Mitteln effektiv und sicher die Schraubanordnung mit einem gewünschten Nenn-Anzugsmoment angezogen werden. Das Lösen erfordert dagegen in der Regel keine Erfassung eines Schraubmoments, da es dann nur darum geht, die axiale Positionssicherung zu lösen, unabhängig davon, welches Schraubmoment hierzu betragsmäßig notwendig ist.

Zur Abstützung des oben genannten hohen Anzugs- oder Lösemoments kann es vorteilhaft sein, mehr als einen Vorsprung an der Schraubmoment-Abstützanordnung vorzusehen, sodass wenigstens zwei Vorsprünge vom Eingriffsabschnitt ausgehend vorstehen können. Damit die Vorsprünge mit einer entsprechenden Anlagekontur des Gegenabstützbereichs stabil in Formschluss-Anlageeingriff gebracht werden können, ist es andererseits vorteilhaft, die Ausnehmung im Gegenabstützbereich nicht zu groß auszubilden und dadurch den Gegenabstützbereich und das ihn ausbildende Bauteil zu sehr zu schwächen. Daher liegen die wenigstens zwei Vorsprünge bezogen auf die Antriebsachse bei zwischen Eingriffsbereich und Gegeneingriffsbereich hergestelltem Eingriff bevorzugt einander diametral gegenüber. Besonders bevorzugt sind aus den genannten Gründen genau zwei Vorsprünge an der Schraubmoment-Abstützanordnung vorgesehen. Diese sollten vorzugsweise wenigstens radial vorstehen, um zur Abstützung hoher Schraubmomente einen ausreichenden Lastarm bilden zu können. Erforderlichenfalls können diese jedoch zusätzlich auch axial vorstehen, etwa bei hergestelltem Eingriff in Richtung vom Antriebsaxialende weg.

Zur Einleitung eines Antriebsdrehmoments in die Antriebsformation kann vorgesehen sein, dass die Antriebsformation mit einer Antriebsdrehmoment-Übertragungsanordnung verbunden ist. Die Antriebsdrehmoment-Übertragungsanordnung ist zur Übertragung von Antriebsdrehmoment zur Antriebsformation hin vorgesehen. Die Antriebsdrehmoment-Übertragungsanordnung ist hierzu mit einem Antriebsmotor der Bodenbearbeitungsmaschine gekoppelt oder/und weist eine Kopplungsformation zur vorübergehenden Kopplung mit dem oben bereits erwähnten gesondert vom Antriebsmotor der Bodenbearbeitungsmaschine ausgebildeten Drehantrieb auf. Grundsätzlich kann also der ohnehin vorhandene Antriebsmotor der Bodenbearbeitungsmaschine, welcher die Arbeitsvorrichtung zu ihrem bestimmungsgemäßen Arbeitsbetrieb antreibt, als Antriebskraftquelle für das Ausüben des Anzugs- oder Lösemoments verwendet werden. Dies ist insbesondere dann möglich, wenn, wie es etwa bei kleineren Bodenbearbeitungsmaschinen möglich ist, ein in weiten Grenzen leistungsregelbarer Antriebsmotor vorhanden ist, wie beispielsweise ein Elektromotor oder ein Hydromotor.

Unabhängig von der Ausgestaltung des Antriebsmotors der Bodenbearbeitungsmaschine kann jedoch stets ein gesondert vom Antriebsmotor ausgebildeter, auch manueller, Drehantrieb verwendet werden, welcher mit der genannten Kopplungsformation vorübergehend zur Übertragung eines Drehmoments gekoppelt sein kann. Die Kopplungsformation kann an einem Bauteil realisiert sein, das Teil der Antriebsdrehmoment-Übertragungsanordnung zwischen dem Antriebsmotor und der Antriebsformation sein kann, oder kann Teil einer weiteren Antriebsdrehmoment-Übertragungsanordnung sein, die nur der Übertragung von Antriebsdrehmoment von dem gesonderten Drehantrieb dient.

Zusätzlich oder alternativ zu der oben beschriebenen abstützanordnungsseitigen Prüfvorrichtung kann zum Zweck der Ermittlung eines tatsächlich ausgeübten Schraubmoments, insbesondere Anzugsmoments, eine antriebsseitige Prüfvorrichtung auf der Antriebsseite der Antriebsformation vorgesehen sein. Dabei kann eine der oben beschriebenen abstützanordnungsseitigen Prüfvorrichtung auch hinsichtlich der angewendeten physikalischen Wirkprinzipien entsprechende mechanische antriebsseitige Prüfvorrichtung in der Antriebsdrehmoment-Übertragungsanordnung angeordnet oder wenigstens anordenbar sein. Insofern gilt für die mechanische antriebsseitige Prüfvorrichtung die obige Beschreibung der abstützanordnungsseitigen Prüfvorrichtung entsprechend. Eine dauerhaft in der Antriebsdrehmoment-Übertragungsanordnung zwischen Antriebsmotor und Antriebsformation angeordnete mechanische antriebsseitige Prüfvorrichtung ist für eine störungsfreie Bodenbearbeitung bevorzugt zu- und abschaltbar, beispielsweise durch Erhöhung des Grenzmomentwerts der Prüfvorrichtung über jene Antriebsdrehmomentwerte hinaus, welche bei der bestimmungsgemäßen Bodenbearbeitung in der Antriebsdrehmoment-Übertragungsanordnung übertragen werden.

Zusätzlich oder alternativ kann eine antriebsseitige Prüfvorrichtung während einer Antriebsdrehmomenteinleitung in die Antriebsformation bei abgestützter Schraubanordnung wenigstens eine die Energiezufuhr zu dem Antriebsmotor oder insbesondere zu dem gesonderten Drehantrieb kennzeichnende Größe erfassen und aus dieser auf das während der Energiezufuhr eingeleitete Antriebsdrehmoment schließen. Dies soll bei Verwendung eines hydraulischen Drehantriebs ausdrücklich die Erfassung wenigstens des Drucks des dem Drehantrieb während der Antriebsdrehmomenteinleitung zugeführten Hydraulikfluids einschließen. Die antriebsseitige Prüfvorrichtung kann daher in einer Hydraulikleitung der Bodenbearbeitungsmaschine vorgesehen sein, die als Lieferleitung zum Anschluss eines hydraulischen Drehantriebs ausgebildet ist. Aufgrund der bekannten Drehmoment-Übertragungsverhältnisse zwischen dem Ort der Erfassung der Prüfvorrichtung und der Schraubanordnung kann wiederum aus dem Antriebsdrehmoment auf das Schraubmoment, insbesondere auf das Anzugsmoment, geschlossen werden.

Die antriebsseitige Prüfvorrichtung kann mit einer Maschinensteuerung der Bodenbearbeitungsmaschine verbunden sein, die, beispielsweise auf Grundlage von in einer Speichervorrichtung hinterlegten Kennfeldern oder/und Wertetabellen aus einem Erfassungswert der Prüfvorrichtung das diesem zugeordnete Schraubmoment ermittelt und dieses an den Fahrzeugführer über ein akustisches oder/und optisches Signal ausgibt. Ebenso kann die Maschinensteuerung auf Grundlage des Erfassungswertes der Prüfvorrichtung ein Erreichen eines Nenn-Schraubmoments anzeigen.

Die Maschinensteuerung der Bodenbearbeitungsmaschine kann in an sich bekannter Weise elektronische Schaltkreise nutzen und Mikroprozessoren oder/und eine speicherprogrammierbare Steuerung sowie einen mit diesen datenübertragungsmäßig gekoppelten Datenspeicher aufweisen.

Bevorzugt ist die Antriebsdrehmoment-Übertragungsanordnung mit jenem Längsendbereich der Antriebsformation zur Übertragung von Drehmoment verbunden, welcher dem Antriebsaxialende der betriebsbereiten Arbeitsvorrichtung näher gelegen ist als dem Sicherungsaxialende. Das ermöglicht ein vorteilhaftes Abstützen des Schraubmoments auf einer Seite der Bodenbearbeitungsmaschine und ein Einleiten eines Antriebsdrehmoments auf der bezogen auf die Antriebsachse entgegengesetzten anderen Seite der Bodenbearbeitungsmaschine.

Aus den oben genannten Gründen befindet sich bevorzugt im Drehmomentübertragungsweg zwischen der Kopplungsformation und der Antriebsformation das oben genannte die Antriebsdrehzahl reduzierende und das Antriebsdrehmoment erhöhende Getriebe.

Bevorzugt ist die Antriebsformation zur Bereitstellung hoher Formstabilität bei gleichzeitig möglichst geringem Gewicht wenigstens abschnittsweise ein hohler Körper, insbesondere wenigstens axialabschnittsweise rohrförmig ausgebildeter Körper. Dieser kann sich zu seinem im betriebsbereiten Zustand der Bodenbearbeitungsmaschine dem Sicherungsaxialende nächstgelegenen Längsende hin verjüngen. Im Bereich dieses Längsendes, vorzugsweise am Längsende selbst, kann die Antriebsformation eine Antriebsdrehmoment übertragende Kopplungsanordnung zur Antriebsdrehmoment übertragenden Kopplung mit einer Gegenkopplungsanordnung der Arbeitsvorrichtung aufweisen. Die Kopplungsanordnung ist zur Übertragung möglichst großer Antriebsdrehmomente bevorzugt in Formschlusseingriff mit der Gegenkopplungsanordnung bringbar und von dieser lösbar.

Bei Bodenbearbeitungsmaschinen kommt es nicht selten vor, dass das genannte Getriebe ein eingangsseitig in es eingegebenes Antriebsdrehmoment zur Ausgangsseite um den Faktor 10 oder mehr erhöht. Daher kann der gesonderte Drehantrieb, welcher bevorzugt ein elektrischer oder pneumatischer Antrieb ist, auch ein manuell betriebener Drehmomentschlüssel sein, da mit Eingangsdrehmomenten von 250 Nm oder mehr unter Anwendung des zwischenangeordneten Drehmoment übersetzenden Getriebes problemlos an der Eingriffsstelle zwischen Antriebsformation und Schraubanordnung 2.500 Nm oder mehr erzielt werden können.

Dem oben zur Vorrichtung Gesagten sieht eine bevorzugte Weiterbildung des oben genannten Verfahrens entsprechend vor, dass es vor dem Antreiben der Antriebsformation ein lösbares Koppeln der Antriebsformation mit einem gesondert vom Antriebsmotor der Bodenbearbeitungsmaschine ausgebildeten Drehantrieb umfasst.

Um mit der Antriebsformation und der Schraubanordnung nicht nur eine axiale Positionssicherung der Arbeitsvorrichtung relativ zur Antriebsformation zu erreichen, sondern damit auch sicherstellen zu können, dass eine zentrale Vorrichtungsachse der Arbeitsvorrichtung im fertig montierten Zustand mit der Antriebsachse der Antriebsformation im Rahmen der erforderlichen Genauigkeit kollinear ist, ist bevorzugt weiter vorgesehen, dass die Antriebsformation an ihrem dem Sicherungsaxialende näheren Längsende eine Zentrierformation aufweist, welche zum formschlüssigen Zentriereingriff mit einer starr mit der Arbeitsvorrichtung verbundenen Gegenzentrierformation ausgebildet ist. Die Zentrierformation ist in der Regel nicht die einzige Zentrierung der Arbeitsvorrichtung bezüglich der Antriebsformation. Üblicherweise ist mit axialem Abstand von der Zentrierformation eine zweite Zentrierung vorgesehen.

Wenngleich grundsätzlich jede Art von Zentrierformation verwendet werden kann, ist ein axial von der Antriebsformation in Richtung vom Antriebsaxialende weg vorstehender Zentrierzapfen der Antriebsformation bevorzugt, da mit diesem Zentrierzapfen eine axial ausreichend lange Gewindebohrung zum Schraubeingriff mit der Schraubanordnung bereitgestellt werden kann.

Ausführungsformen der Bodenbearbeitungsmaschine können derart ausgestaltet sein, dass der Zentrierzapfen der oben erwähnte mit dem Loslager zur Drehlagerung der Arbeitsvorrichtung zusammenwirkende Lagerzapfen ist oder diesen aufweist.

Dementsprechend ist die starr mit der Arbeitsvorrichtung verbundene Gegenzentrierformation bevorzugt eine Zentrierausnehmung, in welche der Zentrierzapfen im fertig montierten Zustand der Arbeitsvorrichtung, gegebenenfalls durchsetzend, einragt und welche den Zentrierzapfen bevorzugt umlaufend berührt. Bevorzugt verjüngt sich der Zentrierzapfen zu seinem auskragenden Längsende hin, ebenso bevorzugt verjüngt sich die Zentrierausnehmung in gleicher Richtung, sodass es beim axialen Aufschieben der Zentrierausnehmung auf den Zentrierzapfen zu einer Selbstzentrierung der Gegenzentrierformation am Zentrierzapfen aus der axialen Relativbewegung heraus kommt.

Gemäß einer besonders bevorzugten Ausführungsform der vorliegenden Erfindung verjüngt sich der Zentrierzapfen zu seinem auskragenden Längsende hin stufenförmig und weist einen axial weiter von der Antriebsformation entfernt gelegenen Vorzentrier-Zapfenabschnitt mit kleinerem Durchmesser sowie einen axial näher bei der Antriebsformation gelegenen Hauptzentrier-Zapfenabschnitt mit größerem Durchmesser auf. Der Vorzentrier-Zapfenabschnitt kann einem "Einfädeln" des Zentrierzapfens in die Zentrierausnehmung und somit einer vorzentrierenden Ausrichtung der Arbeitsvorrichtung an der Antriebsformation bei der Montage derselben dienen, etwa um die Arbeitsvorrichtung in einer weiter unten näher erläuterten Vorbereitungsposition anzuordnen und sie anschließend von der Vorbereitungsposition aufgrund der bereits erfolgten Vorausrichtung unter erleichterten Bedingungen axial in die betriebsbereite Betriebsposition verlagern zu können.

Somit nimmt die mögliche radiale Abweichung der Rotationsachse der Arbeitsvorrichtung von der Antriebsdrehachse mit zunehmender axialer Annäherung der Arbeitsvorrichtung an ihre Betriebsposition ab. Diese Zentrierung der Arbeitsvorrichtung bezüglich der Antriebsdrehachse wird durch den körperlichen Eingriff des wie oben beschreiben ausgebildeten Zentrierzapfens in die Zentrierausnehmung und durch axiale Annäherung der Arbeitsvorrichtung an ihre Betriebsposition bewirkt. Die für die Annäherung der Arbeitsvorrichtung an ihre Betriebsposition benötigte Verlagerungskraft ist zum einen abhängig von dem zu überwindenden radialen Abstand der Rotationsachse der Arbeitsvorrichtung von der Antriebsdrehachse und ist zum anderen abhängig von der körperlichen Ausgestaltung der mit einander wechselwirkenden Flächen: Außenfläche des Zentrierzapfens und Innenfläche der Zentrierausnehmung.

In der Betriebsposition ist die Arbeitsvorrichtung relativ zur Antriebsformation, bevorzugt ausschließlich, durch den Hauptzentrier-Zapfenabschnitt zentriert, welcher von einem Haupt-Zentrierausnehmungsabschnitt der Zentrierausnehmung zentrierend umgeben ist. Ebenso ist der Vorzentrier-Zapfenabschnitt in der Betriebsposition der Arbeitsvorrichtung von einem Vor-Zentrierausnehmungsabschnitt der Zentrierausnehmung umgeben. Zur erleichterten Anordnung des Zentrierzapfens in der Zentrierausnehmung ist zwischen dem Vorzentrier-Zapfenabschnitt und dem Vor-Zentrierausnehmungsabschnitt ein größeres radiales Spiel vorhanden als zwischen dem Hauptzentrier-Zapfenabschnitt und dem Haupt-Zentrierausnehmungsabschnitt. Dies schließt eine radial spielfreie Anlage von Hauptzentrier-Zapfenabschnitt und Haupt-Zentrierausnehmungsabschnitt aneinander ein.

Zur erleichterten Verlagerung der Arbeitsvorrichtung in ihre Betriebsposition kann die Zentrierausnehmung gemäß einer bevorzugten Weiterbildung der vorliegenden Erfindung mit einem sich längs ihrer Verjüngung verringernden Öffnungswinkel ausgebildet sein. Der Öffnungswinkel kann sich dabei in Stufen verringern.

Wiederum soll eine bevorzugte Ausgestaltung der Zentrierausnehmung anhand von Konussen beschrieben werden, die berührend, aber nicht durchdringend, an jeweils zwei axial voneinander mit Abstand gelegenen Berührkreisen anliegen. Axial außerhalb seiner Berührkreise kann ein Konus die Innenfläche der Zentrierausnehmung durchdringen. Zur Unterscheidung dieser Konusse von den oben zur Beschreibung einer bevorzugten Außengestalt des Lagerzafens verwendeten fiktiven Konussen, werden die zur Beschreibung der Innengestalt der Zentrierausnehmung verwendeten Konusse als "virtuelle Konusse" bezeichnet.

Es sei ein erster virtueller Konus angenommen, welcher jeweils an den axial dem Antriebsaxialende nächstgelegenen Rändern des Haupt-Zentrierausnehmungsabschnitts und des Vor-Zentrierausnehmungsabschnitts anliegt.

Weiter sei ein zweiter virtueller Konus angenommen, welcher zum einen an dem axial dem Antriebsaxialende nächstgelegenen Rand des Vor-Zentrierausnehmungsabschnitts und zum anderen an einem dem Antriebsaxialende nächstgelegenen Rand eines auf den Vor-Zentrierausnehmungsabschnitt axial in Einragrichtung des Zentrierzapfens folgenden Radialabsatzes der Zentrierausnehmung oder einer Ausnehmung anliegt, von welcher die Zentrierausnehmung ein Teil ist.

Eine axiale Annäherung der Arbeitsvorrichtung in die Betriebsposition mit einem damit einhergehenden Einführen des Zentrierzapfens in die Zentrierausnehmung ist dann mit besonders geringen Verlagerungskräften möglich, wenn der erste virtuelle Konus einen größeren Öffnungswinkel aufweist als der zweite virtuelle Konus.

Bevorzugt beträgt der Öffnungswinkel des ersten virtuellen Konus zwischen 20° und 40°, besonders bevorzugt zwischen 25° und 35°. Ebenso bevorzugt ist der Öffnungswinkel des ersten virtuellen Konus etwa 3 bis 6 mal, besonders bevorzugt 4 bis 5 mal größer als der Öffnungswinkel des zweiten virtuellen Konus.

Bevorzugt ist die Zentrierausnehmung am selben Bauteil ausgebildet wie die oben beschriebenen zylindrischen Lagerflächen, welche mit dem Loslager zusammenwirken. Als solches Bauteil kann ein unmittelbar mit der Arbeitsvorrichtung verbundener Lagerzapfen dienen, wie er oben bereits beschrieben wurde. Zur Sicherstellung eines ausreichend tragfähigen Lagerzapfens eingedenk der während einer Bodenbearbeitung auftretenden hohen Bearbeitungskräfte und daraus resultierender Reaktionskräfte ist vorzugsweise der Öffnungswinkel des ersten virtuellen Konus größer als der Öffnungswinkel des oben beschriebenen ersten fiktiven Konus. Alternativ oder bevorzugt zusätzlich kann der Öffnungswinkel des zweiten virtuellen Konus kleiner sein als der Öffnungswinkel des oben beschriebenen zweiten fiktiven Konus. Dadurch kann ein Lagerzapfen mit axial durchgehender Ausnehmung bereitgestellt werden, welcher über seine axiale Erstreckung eine radial stets ausreichende, aber nicht übermäßige Materialdicke aufweist.

Weiter unten ist eine bevorzugte Verlagerung der Arbeitsvorrichtung in die Betriebsposition mittels Schwenkbewegung des Verkleidungsbauteils beschrieben. Bei dieser Art der Verlagerung der Arbeitsvorrichtung in die Betriebsposition erfolgt sowohl ein Aufschieben des Loslagers auf den Lagerzapfen als auch ein Aufschieben der Zentrierausnehmung auf den Zentrierzapfen in engem zeitlichen Zusammenhang und bewirkt alleine durch das Verschwenken des Verkleidungsbauteils als einzigem Kraftübertragungsvorgang von außen sowohl auf das Loslager als auch auf die Arbeitsvorrichtung. Daher stehen die Außengestalt des Lagerzapfens und die Innengestalt der Zentrierausnehmung als beteiligte Gestalten an einem einheitlichen Verlagerungsvorgang in starkem technischem Zusammenhang.

Zusätzlich oder alternativ kann ein erleichtertes Einfädeln des Zentrierzapfens in die Zentrierausnehmung und ein anschließendes Verlagern der Arbeitsvorrichtung in die Betriebsposition auch dadurch erzielt werden, dass der Vor-Zentrierausnehmungsabschnitt axial länger ausgebildet ist als der Haupt-Zentrierausnehmungsabschnitt. Weiter bevorzugt kann der Betrag, um welchen der Haupt-Zentrierausnehmungsabschnitt axial länger ist als der Vor-Zentrierausnehmungsabschnitt, größer sein als der Betrag, um welchen der Haupt-Zentrierausnehmungsabschnitt radial weiter außen gelegen ist als der Vor-Zentrierausnehmungsabschnitt. Ebenso bevorzugt kann der axiale Abstand zwischen Haupt- und Vor-Zentrierausnehmungsabschnitt kleiner sein als ihr radialer Abstand voneinander. Dies ermöglicht die vorteilhafte Verwendung axial kurzer Zentrierzapfen. Zur Klarstellung sein angemerkt, dass an einem Axialende sowohl des Haupt- als auch des Vor-Zentrierausnehmungsabschnitts etwaig vorhandene Fasen oder Rundungen oder dergleichen nicht Teil des betreffenden Zentrierausnehmungsabschnitts sind.

Damit ist es auch möglich, die Arbeitsvorrichtung mit der starr mit ihr verbundenen Gegenzentrierformation bei der Montage an die Antriebsformation, etwa bei der Anordnung einer neuen oder gewarteten Arbeitsvorrichtung am Maschinenkörper, axial grob an der Antriebsformation vorzupositionieren und mittels der zentralen Schraubanordnung in ihre axiale Endposition zu verlagern und dort zu sichern. Dabei kann die axiale Verlagerung der Arbeitsvorrichtung durch unmittelbaren Angriff eines Drehmoment-Werkzeugs am Schraubbauteil erfolgen, etwa durch einen Drehmomentschlüssel, Schraubenschlüssel oder durch einen Schlagschrauber und dergleichen, sodass zwar die Schraubanordnung, nicht jedoch ein mit der Antriebsformation dauerhaft oder vorübergehend gekoppelter Antriebsmotor bzw. Drehantrieb zur axialen Positionierung der Arbeitsvorrichtung relativ zur Antriebsformation genutzt wird. Der Vorteil liegt darin, dass bei einem Werkzeugeingriff am Schraubbauteil dieses schraubend an die Antriebsformation angenähert werden kann, ohne dass dies zu einer Drehbewegung der Antriebsformation und damit auch der Arbeitsvorrichtung führt. Hierfür reicht ein wesentlich geringeres Drehmoment als das oben zum Herstellen oder/und Lösen der axialen Positionssicherung genannte Drehmoment aus. Bei entsprechender Ausgestaltung von Schraubmoment-Abstützformation und Gegenabstützbereich kann die Arbeitsvorrichtung mittels der Schraubanordnung unter Verwendung der Schraubmoment-Abstützformation und des Gegenabstützbereichs von einer axial von der Betriebsposition entfernten Vorbereitungsposition axial zur Betriebsposition hin oder noch vorteilhafter in die Betriebsposition verlagert werden. Hierzu können wiederum die oben genannten möglichen Antriebskraftquellen genutzt werden. Bevorzugt ist hierzu die Schraubmoment-Abstützformation am Schraubbauteil der Schraubanordnung verrastbar oder sonstwie mit erhöhtem axialem Abziehwiderstand anordenbar, damit die Schraubmoment-Abstützformation während des Anschraubvorgangs des Schraubbauteils in Eingriff mit diesem verbleibt.

Dann, wenn die Arbeitsvorrichtung ihre bestimmungsgemäße Axialposition erreicht hat, können das oben genannte Verfahren und die oben genannte Schraubmoment-Abstützanordnung verwendet werden, um durch Antreiben der Antriebsformation das gewünscht hohe Anzugsmoment auf die Schraubanordnung auszuüben.

Für das axiale Aufschieben der Arbeitsvorrichtung auf die Antriebsformation reicht es aus, wenn das Schraubbauteil einen Abschnitt umfasst, welcher unmittelbar in Anlage an ein starr mit der Arbeitsvorrichtung verbundenes Bauteil oder an ein Hilfsbauteil kommt, das eine Kraft vom Schraubbauteil zur Arbeitsvorrichtung überträgt. Hierzu reicht es aus, wenn der Abschnitt des Schraubbauteils eine von der Schraubanordnung durchsetzte zentrale Öffnung des starr mit der Arbeitsvorrichtung verbundenen Bauteils oder des Hilfsbauteils radial überragt. Das Hilfsbauteil kann eine Hülse, gegebenenfalls eine konische Hülse sein.

Grundsätzlich kann das Schraubbauteil, wie oben bereits angedeutet, eine Mutter sein und kann die Antriebsformation einen in Richtung vom Antriebsaxialende weg zum Sicherungsaxialende hin von der Antriebsformation abstehenden Gewindeschaft umfassen, auf welchen die Mutter aufgeschraubt ist. Dies ist jedoch nicht bevorzugt, da bei der Montage und Demontage der Arbeitsvorrichtung an die Antriebsformation bzw. von dieser weg die in der Regel schwere Arbeitsvorrichtung in Kontakt mit dem Gewindeschaft kommen und diesen verformen kann. Bevorzugt ist daher vorgesehen, dass das Schraubbauteil einen Gewindeschaft und einen verglichen mit dem Gewindeschaft radial breiteren Werkzeugangriffsabschnitt mit einer Werkzeugangriffsformation aufweist, wobei der Schaft in die Antriebsformation, insbesondere in die Zentrierformation einschraubbar ist.

Bevorzugt ist das Schraubbauteil eine Schraube mit Gewindeschaft und einstückig daran ausgebildetem Kopf. Dann ist das Schraubbauteil die Schraubanordnung. Die Werkzeugangriffsformation ist mit der oben genannten identisch, welche in Eingriff mit dem Eingriffsabschnitt der gesondert von der Schraubanordnung bzw. dem Schraubbauteil ausgebildeten Schraubmoment-Abstützanordnung bringbar ist.

Alternativ kann die Arbeitsvorrichtung auch ohne Einsatz des Schraubbauteils von der Vorbereitungsposition zu der Betriebsposition hin verlagert werden. Dann nämlich, wenn das Loslager zur Drehlagerung der Arbeitsvorrichtung, wie oben beschrieben, gemeinsam mit einem Verkleidungsbauteil schwenkbeweglich am Maschinenrahmen angeordnet ist, kann die Arbeitsvorrichtung durch Schwenkbewegung des Verkleidungsbauteils von der Zugangsstellung in die Schließstellung von der Vorbereitungsposition zu der Betriebsposition hin, besonders bevorzugt in die Betriebsposition verlagert werden.

Das Verkleidungsbauteil kann zur Unterstützung der Verlagerung der Arbeitsvorrichtung von der Vorbereitungsposition zu der Betriebsposition hin, vorzugsweise in die Betriebsposition, wenigstens während eines Bewegungsabschnitts von der Zugangsstellung in die Schließstellung durch einen Schwenkaktuator zur Schwenkbewegung antreibbar sein. Das Verkleidungsbauteil kann auch bidirektional in beide entgegengesetzte Schwenksinne zwischen Zugangsstellung und Schließstellung durch den Schwenkaktuator zur Schwenkbewegung antreibbar sein.

So kann beispielsweise das Verkleidungsbauteil manuell von der Zugangsstellung soweit in Richtung der Schließstellung bewegt werden, bis ein Abschnitt des Loslagers in einen Anlageeingriff mit einem Abschnitt des Lagerzapfens gelangt. Nach Herstellung dieses Anlageeingriffs kann das Verkleidungsbauteil durch einen Schwenkaktuator, beispielsweise durch eine oder mehrere Kolben-Zylinder-Anordnungen, kraftbeaufschlagt in die Schließstellung bewegt werden, wobei gleichzeitig die Arbeitsvorrichtung in die Betriebsposition verlagert wird und dabei das Loslager auf den Lagerzapfen in eine drehlagerbereite Stellung aufgeschoben wird.

Die Arbeitsvorrichtung kann auch nach Lösen der axialen Positionssicherung in einfacher Weise aus ihrer betriebsbereiten Axialposition herausbewegt werden. Dabei ist besonders auf eine die axiale Abzugsbewegung einleitende Anfangsbewegung zu achten, da die im Betrieb nicht nur mechanisch, sondern auch durch Schmutz stark belastete Arbeitsvorrichtung gerade im bodenabtragenden Bearbeitungsbetrieb häufig in ihrer axialen Betriebsposition an der Antriebsformation festbackt und erst eine so bewirkte erhöhte Haftung überwunden werden muss. Ein solches Überwinden von eigentlich unerwünschten Haltekräften nach Lösen der axialen Positionssicherung kann mechanisch dadurch erreicht werden, dass ein die Gegenzentrierformation aufweisendes oder starr mit der Gegenzentrierformation verbundenes Zentrierbauteil einen zentralen Durchgang aufweist, durch welchen hindurch - bei an der Antriebsformation angeordneter Arbeitsvorrichtung - die Antriebsformation, insbesondere die Zentrierformation erreichbar ist. Weiter weist das Zentrierbauteil mit axialem Abstand in Richtung von der Antriebsformation weg eine Befestigungs- oder/und Vortriebsformation, insbesondere in Gestalt eines Gewindes auf, in welcher nach Entfernung des Schraubbauteils von der Bodenbearbeitungsmaschine - wiederum bei an der Antriebsformation angeordneter Arbeitsvorrichtung - ein Lösebauteil befestigbar ist oder/und mittels welcher das Lösebauteil unter axialer Kraftabstützung am Zentrierbauteil in Richtung zur Antriebsformation, insbesondere zur Zentrierformation hin vortreibbar ist.

Das Zentrierbauteil kann gemäß einer bevorzugten Weiterbildung der vorliegenden Erfindung der oben genannte mit dem Loslager zur Drehlagerung der Arbeitsvorrichtung zusammenwirkende Lagerzapfen der Arbeitsvorrichtung sein oder diesen Lagerzapfen aufweisen.

Gemäß einer konstruktiv wegen ihrer Stabilität bevorzugten Lösung kann das Lösebauteil eine Kooperationsformation zum Eingriff mit der Befestigungs- oder/und Vortriebsformation, einen Anlageabschnitt zur Ausübung von Axialkraft auf die Antriebsformation, insbesondere auf die Zentrierformation, und eine Drehmoment-Übertragungsformation zum Drehmoment übertragenden Eingriff mit einem Drehmoment-Werkzeug aufweisen. Das Drehmoment-Werkzeug kann ein manueller oder automatisierter Drehmomentschlüssel sein oder kann die Schraubmoment-Abstützanordnung sein. Der Eingriffsbereich der Schraubmoment-Abstützanordnung kann in Drehmoment übertragenden Eingriff mit der Drehmoment-Übertragungsformation gebracht werden. Dann kann der Anlageabschnitt des Lösebauteils unter Drehmomentabstützung des Lösebauteils durch die Schraubmoment-Abstützanordnung auf der einen Seite der Bodenbearbeitungsmaschine und durch Einleitung eines Drehmoments auf der axial entgegengesetzten anderen Seite (Antriebsseite) der Bodenbearbeitungsmaschine unter Ausnutzung des Eingriffs zwischen der Kooperationsformation mit der Befestigungs- oder/und Vortriebsformation in Anlage an die Antriebsformation gebracht werden. Unter fortgesetzter Drehmomenteinleitung kann dann die Arbeitsvorrichtung durch das an der Antriebsformation anliegende und mit der Arbeitsvorrichtung in Formschlusseingriff stehende Lösebauteil von der Antriebsformation axial abgedrückt werden. Denn der Formschlusseingriff, bevorzugt etwa ein Schraubeingriff, ermöglicht eine axiale Relativbewegung zwischen Arbeitsvorrichtung und Lösebauteil. Dieser Aspekt der Verwendung der Schraubmoment-Abstützanordnung an einer Bodenbearbeitungsmaschine zusammen mit dem Lösebauteil an einer die Antriebsformation radial außen umgebenden Arbeitsvorrichtung, die bezüglich ihrer axialen Relativposition nicht mehr an der Antriebsformation gesichert ist, ist nicht nur eine bevorzugte Weiterbildung des obigen Erfindungsgedanken einer Verwendung der Schraubmoment-Abstützanordnung zusammen mit der Schraubanordnung, sondern bildet auch einen von dem obigen unabhängigen weiteren Erfindungsgedanken. Denn grundsätzlich bildet auch das Lösebauteil eine, bevorzugt ebenfalls zentrale, Schraubanordnung im Sinne der vorliegenden Erfindung, mit dem Unterschied, dass sie nicht zur Sicherung der Arbeitsvorrichtung an der Antriebsformation gegen eine axiale Verlagerung ausgebildet ist, sondern zum genauen Gegenteil: zur axialen Verlagerung der Arbeitsvorrichtung relativ zur Antriebsformation von dieser weg.

Bevorzugt ist die Kooperationsformation ein Außengewinde und ist die Befestigungs- bzw. Vortriebsformation ein Innengewinde. Ebenfalls bevorzugt weist der zentrale Durchgang des Zentrierbauteils eine größere lichte Weite auf als eine zentrale Ausnehmung der Antriebsformation bzw. der Zentrierformation, in welcher bei hergestellter axialer Positionssicherung ein Gewindeabschnitt der Schraubanordnung aufgenommen ist. In diesem Falle kann von der Kooperationsformation ein stabiler, weil ausreichend dicker Schaftabschnitt auskragen, an dessen von der Kooperationsformation fernliegendem Längsende sich der Anlageabschnitt befindet. Dieser kann durch Vortrieb des Lösebauteils, bevorzugt durch schraubenden Vortrieb, in Anlage mit dem die zentrale Ausnehmung der Antriebsformation, insbesondere der Zentrierformation, umgebenden Material gebracht werden. Auf der vom Anlageabschnitt wegweisenden Seite der Kooperationsformation kann die Drehmoment-Übertragungsformation ausgebildet sein.

Bevorzugt ist die Arbeitsvorrichtung eine Fräswalze oder ein Fräsrotor, umfassend ein radial innen zumindest abschnittsweise hohles Fräswalzenrohr, auf dessen radial nach außen weisender Seite Material abtragende Werkzeuge, wie Fräsmeißel und zu deren vereinfachtem Austausch Meißelwechselhalter, in an sich bekannter Weise angeordnet sein können. Die Arbeitsvorrichtung kann relativ zum Maschinenkörper oder gemeinsam mit dem zum Maschinenkörper beitragenden Maschinenrahmen zum Aufstands-Untergrund hin absenkbar und von diesem abhebbar sein.

Bei Bodenbearbeitungsmaschinen mit Fräswalzen ist üblicherweise die eine Seite der Bodenbearbeitungsmaschine, welche dem Antriebsaxialende der an den Maschinenkörper betriebsbereit anmontierten Fräswalze näher liegt, die Antriebsseite und ist die gegenüberliegende Seite der Bodenbearbeitungsmaschine, welche dem Sicherungsaxialende der Fräswalze näher liegt, die sogenannte Nullseite. In besonders vorteilhafter Weise ermöglicht die vorliegende Erfindung, die Herstellung oder Lösung einer axialen Positionssicherung der Arbeitsvorrichtung an der Antriebsformation durch Schraubmomentabstützung der zentralen Schraubanordnung auf der Nullseite und durch Einleitung von Antriebsdrehmoment in die Antriebsformation auf der Antriebsseite der Bodenbearbeitungsmaschine.

Ebenso ermöglicht die vorliegende Erfindung zusätzlich oder alternativ ein mechanisches Abdrücken der Arbeitsvorrichtung in axialer Richtung von der Antriebsformation unter Verwendung des oben genannten Lösebauteils und der Schraubmoment-Abstützanordnung. Dabei erfolgt eine Schraubmomentabstützung des Lösebauteils auf der Nullseite durch die Schraubmoment-Abstützanordnung und erfolgt eine Einleitung von Antriebsdrehmoment in die Antriebsformation auf der Antriebsseite der Bodenbearbeitungsmaschine.

Die vorliegende Erfindung wird nachfolgend anhand der beiliegenden Zeichnungen näher erläutert werden. Es stellt dar:
- Figur 1: eine grobschematische Seitenansicht einer erfindungsgemäßen Ausführungsform einer Bodenbearbeitungsmaschine in Form einer Großfräse in einer Stellung für einen Abroll-Fahrbetrieb,
- Figur 2: eine schematische Längsschnittansicht durch die Arbeitsvorrichtung der Bodenbearbeitungsmaschine von Figur 1 in einem für eine Bodenbearbeitung betriebsbereiten Zustand, wobei die Schnittebene die Rotationsachse der Arbeitsvorrichtung enthält,
- Figur 3: eine vergrößerte Längsschnitt-Teildarstellung des in Figur 2 rechten Längsendes von Antriebsformation und Fräswalze,
- Figur 4: eine perspektivische Ansicht einer Schraubmoment-Abstützanordnung zum Herstellen oder/und Lösen einer axialen Positionssicherung der Fräswalze an einer Antriebsformation der Bodenbearbeitungsmaschine,
- Figur 5: die als Werkzeuganordnung ausgebildete Schraubmoment-Abstützanordnung von Figur 4 in Alleinstellung,
- Figur 6: eine Figur 3 in wesentlichen Bestandteilen entsprechende Längsschnitt-Teildarstellung des rechten Längsendbereichs von Antriebsformation und Fräswalze mit an der Schraubanordnung angeordneter Schraubmoment-Abstützanordnung gemäß Figuren 4 und 5,
- Figur 7: eine der Ansicht von Figur 6 entsprechende Längsschnittansicht einer alternativen Ausführungsform von Antriebsformation und Fräswalze,
- Figur 8: eine im Wesentlichen der Ausführungsformen der Figuren 3 und 6 entsprechende Antriebsformation und Fräswalze mit einem Lösebauteil zum axialen Abziehen der Fräswalze von der Antriebsformation,
- Figur 9: das Lösebauteil von Figur 8 in Einzeldarstellung,
- Figur 10: eine dritte Ausführungsform von Antriebsformation und Fräswalze in einer den Figuren 3 und 6 bis 8 entsprechenden Längsschnitt-Teilansicht,
- Figur 11A: eine Seitenansicht eines bevorzugten Lagerbauteils, umfassend einen Verbindungsflansch und einen davon auskragenden Lagerzapfen, wie es in Figur 6 gezeigt ist,
- Figur 11B: das Lagerbauteil von Figur 11A in Längsschnittansicht,
- Figur 12: das Lagerbauteil der Figuren 11A und 11B in der Draufsicht,
- Figur 13A: eine Seitenansicht eines zu jenem der Figur 11A alternativen Lagerbauteils,
- Figur 13B: eine Längsschnittansicht des Lagerbauteils von Figur 13A und
- Figur 14: eine Draufsicht des Lagerbauteils von Figur 14.

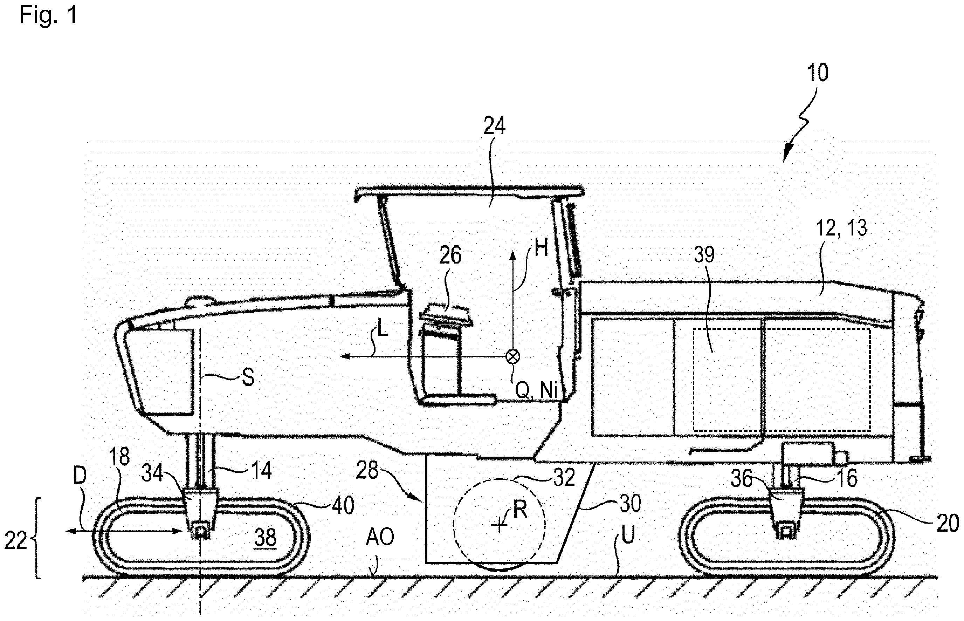

In Figur 1 ist eine erfindungsgemäße Ausführungsform einer Bodenbearbeitungsmaschine in Gestalt einer Boden- oder Straßenfräse allgemein mit 10 bezeichnet. Sie umfasst einen Maschinenrahmen 12, welcher das Grundgerüst für einen Maschinenkörper 13 bildet. Der Maschinenkörper 13 umfasst den Maschinenrahmen 12 und die mit dem Maschinenrahmen verbundenen, gegebenenfalls relativ zu diesem beweglichen, Bauteile der Maschine 10.

Der Maschinenkörper 13 umfasst vordere Hubsäulen 14 und hintere Hubsäulen 16, welche einenends mit dem Maschinenrahmen 12 und anderenends mit vorderen Laufwerken 18 bzw. mit hinteren Laufwerken 20 verbunden sind. Der Abstand des Maschinenrahmens 12 von den Laufwerken 18 und 20 ist durch die Hubsäulen 14 und 16 veränderbar.

Die Laufwerke 18 und 20 sind beispielhaft als Kettenlaufwerke dargestellt. Einzelne oder alle Laufwerke 18 oder/und 20 können abweichend hiervon auch Radlaufwerke sein.

Der Betrachter von Figur 1 blickt auf die Bodenbearbeitungsmaschine oder kurz "Maschine" 10 in Richtung der zur Zeichenebene von Figur 1 orthogonalen Maschinenquerrichtung Q. Eine zur Maschinenquerrichtung Q orthogonale Maschinenlängsrichtung ist mit L bezeichnet und verläuft parallel zur Zeichenebene von Figur 1. Eine Maschinenhöhenrichtung H verläuft ebenfalls parallel zur Zeichenebene von Figur 1 und orthogonal zur Maschinenlängs- und zur Maschinenquerrichtung L bzw. Q. Die Pfeilspitze der Maschinenlängsrichtung L in Figur 1 weist in Vorwärtsrichtung. Die Maschinenhöhenrichtung H verläuft parallel zur Gierachse der Maschine 10, die Maschinenlängsrichtung L verläuft parallel zur Rollachse und die Maschinenquerrichtung Q verläuft parallel zur Nickachse Ni.

Die Bodenbearbeitungsmaschine 10 kann einen Fahrstand 24 aufweisen, von dem aus ein Maschinenführer über ein Schaltpult 26 die Maschine 10 steuern kann.

Unter dem Maschinenrahmen 12 ist eine Arbeitsbaugruppe 28 angeordnet, hier beispielhaft als Fräsbaugruppe 28 mit einer in einem Fräswalzenkasten 30 aufgenommenen Fräswalze 32, die um eine in Maschinenquerrichtung Q verlaufende Fräsachse R rotierbar ist, um damit während einer Bodenbearbeitung Untergrundmaterial ausgehend von der Aufstandsoberfläche AO des Untergrunds U mit einer durch die relative Höhenlage des Maschinenrahmens 12 bestimmten Frästiefe abtragen zu können. Die Fräswalze 32 ist daher eine Arbeitsvorrichtung im Sinne der vorliegenden Anmeldung.

Die Höhenverstellbarkeit des Maschinenrahmens 12 durch die Hubsäulen 14 und 16 dient auch der Einstellung der Fräs- oder allgemein Arbeitstiefe der Maschine 10 bei der Bodenbearbeitung. Es handelt sich bei der beispielhaft dargestellten Bodenbearbeitungsmaschine 10 um eine Großfräse, für die die Anordnung der Fräsbaugruppe 28 in Maschinenlängsrichtung L zwischen den vorderen und den hinteren Laufwerken 18 bzw. 20 typisch ist. Derartige Großfräsen oder auch bodenabtragende Maschinen im Allgemeinen weisen üblicherweise ein Transportband auf, um abgetragenes Bodenmaterial von der Maschine 10 weg zu transportieren. Ein auch bei der Maschine 10 grundsätzlich vorhandenes Transportband ist aus Gründen besserer Übersichtlichkeit in Figur 1 nicht dargestellt.

In der Seitenansicht von Figur 1 nicht zu erkennen ist, dass die Maschine 10 sowohl in ihrem vorderen Endbereich als auch in ihrem hinteren Endbereich jeweils zwei Hubsäulen 14 bzw. 16 mit jeweils einem damit verbundenen Laufwerk 18 bzw. 20 aufweist. Die vorderen Hubsäulen 14 sind in weiterhin an sich bekannter Weise jeweils mittels einer Laufwerk-Verbindungsstruktur 34, etwa einer das Laufwerk 18 in Maschinenquerrichtung Q übergreifenden Verbindungsgabel, mit den Laufwerken 18 gekoppelt. Die hinteren Hubsäulen 16 sind mit ihrem jeweiligen Laufwerk 20 über eine mit der Laufwerk-Verbindungsstruktur 34 identisch aufgebaute Laufwerk-Verbindungsstruktur 36 verbunden. Die Laufwerke 18 und 20 sind im Wesentlichen identisch aufgebaut und bilden das Fahrwerk 22 der Maschine. Die Laufwerke 18 und 20 sind motorisch angetrieben, in der Regel durch einen nicht dargestellten Hydromotor.

Die Antriebskraftquelle der Maschine 10 bildet eine am Maschinenrahmen 12 aufgenommene Brennkraftmaschine 39. Durch sie wird die Fräswalze 32 im dargestellten Ausführungsbeispiel zur Drehung angetrieben. Durch die Leistung der Brennkraftmaschine 39 wird außerdem an der Maschine 10 ein Hydraulikdruckreservoir bereitgestellt, durch welches Hydromotoren und hydraulische Aktuatoren an der Maschine betreibbar sind. Die Brennkraftmaschine 39 ist somit auch Quelle der Vortriebskraft der Maschine 10.

Das Laufwerk 18 mit einer durch den Doppelpfeil D angedeuteten Laufrichtung weist im dargestellten Beispiel eine radial innere Aufnahme-und Führungsstruktur 38 auf, an der eine umlaufbare Laufkette 40 angeordnet und zur Umlaufbewegung geführt ist.

Die Hubsäule 14 und mit ihr das Laufwerk 18 ist durch eine nicht näher dargestellte Lenkvorrichtung um eine Lenkachse S drehbar. Bevorzugt zusätzlich, aber auch alternativ kann die Hubsäule 16 und mit ihr das Laufwerk 20 durch eine Lenkvorrichtung um eine zur Lenkachse S parallele Lenkachse drehbar sein.

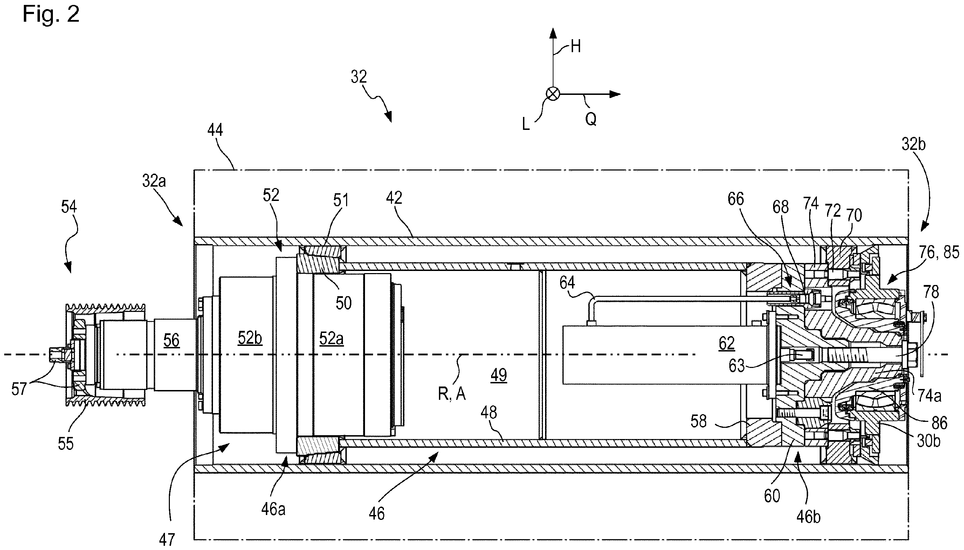

In Figur 2 ist eine Längsschnittansicht der Fräswalze 32 von Figur 1 in einer die Rotationsachse R der Fräswalze enthaltenden Schnittebene gezeigt.

Die Fräswalze 32 umfasst ein im Wesentlichen zylindrisches Fräswalzenrohr 42, auf deren radial äußerer Seite in an sich bekannter Weise Meißelhalter oder Meißelwechselhalter mit darin wiederum auswechselbar aufgenommenen Fräsmeißeln vorgesehen sind. Eine strichpunktierte Linie 44 gibt den Wirkdurchmesser (Schnittkreis-Zylinder) der Fräswalze 32 an, definiert durch die Fräsmeißelspitzen der nicht dargestellten Fräsmeißel. Die Fräswalze 32 befindet sich in einer zur bodenabtragenden Bearbeitung betriebsbereiten Konfiguration. Die Fräswalze 32 ist hierzu mit einer Antriebsformation 46 Drehmoment übertragend verbunden. Die Fräswalze 32 umgibt die Antriebsformation 46 radial außen.

In einem Getriebegehäuse 52 ist ein drehzahluntersetzendes und drehmomentübersetzendes Planetengetriebe aufgenommen. Ein in Figur 2 rechter Teil 52a des Getriebegehäuses 52 ist mit dem Hohlrad des Planetengetriebes zur gemeinsamen Drehung gekoppelt. Ein in Figur 2 linker Teil 52b des Getriebegehäuses 52 ist maschinenrahmenfester Teil des Maschinenkörpers 13.

Die Antriebsformation 46 umfasst ein Innenrohr 48, einen Stützkonus 50 und den relativ zum Maschinenrahmen 12 drehbaren Teil 52a des Getriebegehäuses 52. Der Stützkonus 50 und das Innenrohr 48 sind miteinander und als Baugruppe mit dem Getriebegehäuseteil 52a zur gemeinsamen Drehung um die Antriebsachse A der Antriebsformation 46 verbunden. Im betriebsbereiten Zustand der Fräswalze 32 sind die Antriebsachse A der Antriebsformation 46 und die Rotationsachse R der Fräswalze 32 koaxial.

Das Fräswalzenrohr 42 ist durch einen negativ-konischen Gegenstützkonus 51 am Stützkonus 50 der Antriebsformation 46 abgestützt.

Weiter ist die Antriebsformation 46 mit einer Antriebsdrehmoment-Übertragungsanordnung 54 verbunden, welche im dargestellten Beispiel unter anderem eine Riemenscheibe 55 umfasst. Die Riemenscheibe 55 ist mit einer in Figur 2 nicht dargestellten Eingangswelle des Planetengetriebes im Getriebegehäuse 52 verbunden. Die mit der Riemenscheibe 55 zur gemeinsamen Drehung verbundene Eingangswelle verläuft durch einen im dargestellten Ausführungsbeispiel maschinenrahmenfesten Wellentunnel 56, welcher mit dem Getriebegehäuseteil 52b starr verbunden ist.

Die Antriebsformation 46 bildet mit der maschinenrahmenfesten Baugruppe aus Getriebegehäuseteil 52b und Wellentunnel 56 eine Antriebsbaugruppe 47, welche von einem Antriebsaxialende 32a der Fräswalze 32 her in die Fräswalze 32 axial einragt. Bevorzugt überragt die Fräswalze 32 die Antriebsformation 46 als den relativ zum Maschinenrahmen 12 drehbaren Teil der Antriebsbaugruppe 47 axial zu beiden Seiten.

Die Antriebsbaugruppe 47, und mit ihr die Antriebsformation 46, ist im Bereich des Wellentunnels 56 am Maschinenkörper 13 gelagert. Die Lagerung der Antriebsformation 46 im Bereich des drehbaren Getriebegehäuseteils 52a bildet ein Festlager der Antriebsformation 46. Das näher an der Riemenscheibe 55 gelegene axiale Längsende 46a der Antriebsformation 46 ist daher auch als festlagerseitiges Längsende 46a bezeichnet.

Die Fräswalze 32 erstreckt sich axial längs ihrer im betriebsbereiten Zustand mit der Antriebsachse A zusammenfallenden Rotationsachse (Fräsachse) R zwischen dem in Figur 2 der Antriebsdrehmoment-Übertragungsanordnung 54 näher gelegenen Antriebsaxialende 32a und einem dem Antriebsaxialende entgegengesetzten Sicherungsaxialende 32b, welches der axialen Positionssicherung der Fräswalze 32 im betriebsbereiten Zustand näher gelegen ist.

An dem dem festlagerseitigen Längsende axial entgegengesetzten loslagerseitigen Längsende 46b weist die Antriebsformation 46 einen Tragring 58 und einen mit dem Tragring 58 verbundenen endseitigen Deckel 60 auf. Der Tragring 58 ist im dargestellten Ausführungsbeispiel schweißtechnisch mit dem Innenrohr 48 verbunden. Der Deckel 60 kann mit dem Tragring 58 ebenfalls verschweißt oder auch verschraubt sein. Er ist mit dem Tragring 58 und dem Innenrohr 48 zur gemeinsamen Drehung um die Antriebsachse A verbunden.

Der Tragring 58 kann in unterschiedlicher Art und Weise ausgestaltet sein. Auf seine Gestalt kommt es nicht wesentlich an. Er ist in den Darstellungen der vorliegenden Anmeldung jeweils in geringfügig abweichender Gestalt gezeigt, was auf die vorliegende Erfindung jedoch keinerlei Einfluss hat.

Entsprechendes gilt für die radial äußeren Bereiche des Deckels 60, welche mit dem Tragring 58 zur Bildung einer drehfesten Verbindung zusammenwirken.

In dem in Figur 2 dargestellten ersten Ausführungsbeispiel ist im Inneren 49 der Antriebsformation 46 ein Hydraulikzylinder 62 aufgenommen, welcher mit seiner Hydraulikzylinderachse koaxial zur Antriebsachse A der Antriebsformation 46 angeordnet ist. Der Hydraulikzylinder 62 ist mittels einer Hydraulik-Anschlussleitung 64 durch eine Energie-Durchgangsöffnung 66 im Deckel 60 hindurch mit Hydraulikfluid versorgbar.

Die Hydraulik-Anschlussleitung 64 endet an ihrem vom Hydraulikzylinder 62 fern liegenden Längsende in einer Kupplungsformation 68, welche zur Versorgung des Hydraulikzylinders 62 mit einer Gegenkupplungsformation einer nicht dargestellten Versorgungsleitung verbindbar ist, um die Kolbenstange 63 aus dem Hydraulikzylinder 62 aus- und in diesen wieder einfahren zu können. Zum Betrieb eines bevorzugten doppeltwirkenden Hydraulikzylinders können zwei Hydraulik-Anschlussleitungen 64 vorgesehen sein, für jede Bewegungsrichtung der Kolbenstange 63 eine.

Mit der Kolbenstange 63 kann, nachdem die in Figur 2 erkennbare axiale Positionssicherung der Fräswalze 32 an der Antriebsformation 46 gelöst ist, die Fräswalze 32 zur Demontage von der Antriebsformation 46 axial weggedrückt oder zur Montage auf die Antriebsformation 46 aufgezogen werden.

In einem dem Sicherungsaxialende 32b näher gelegenen Bereich ist radial innen an dem Fräswalzenrohr 42 ein Verbindungsring 70 angeordnet und zur gemeinsamen Drehung mit dem Fräswalzenrohr 42 verbunden, im dargestellten Beispiel durch eine Schweißverbindung.

Das Fräswalzenrohr 42 ist über den Verbindungsring 70 mittels Schraubbolzen 72 mit einem Verbindungsflansch 74 starr verbunden.

An dem Verbindungsflansch 74 ist, vorzugsweise einstückig mit diesem, ein Lagerzapfen 74a vorgesehen, welcher von einem Verbindungsbereich des Verbindungsflansches 74 mit dem Verbindungsring 70 ausgehend axial zum Sicherungsaxialende 32b hin auskragt.

An dem Lagerzapfen 74a ist im betriebsbereiten Zustand der Fräswalze 32 ein die Antriebsformation 46 abstützendes Loslager 76 angeordnet. Das vom Festlager axial mit Abstand angeordnete Loslager 76 ist axial vom Lagerzapfen 74a abziehbar.

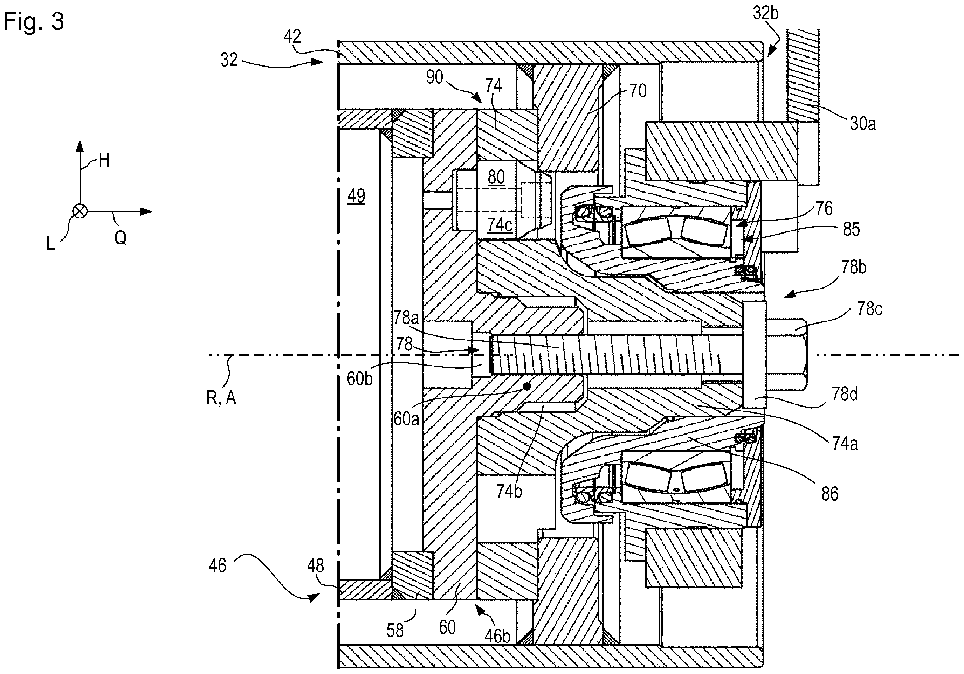

Das Loslager 76 kann beispielsweise in einer Seitenplatte bzw. Seitentür 30a (s. Figuren 3, 4, 6, 7, und 10) aufgenommen sein, welche Teil des Fräswalzenkastens 30 ist und der Fräswalze 32 am Sicherungsaxialende 32b stirnseitig axial gegenüberliegt. In Figur 2 ist lediglich ein mit einer solchen Seitenwand 30a starr verbundenes Bauteil 30b als Lagerfläche für den äußeren Lagerring des Loslagers 76 gezeigt.

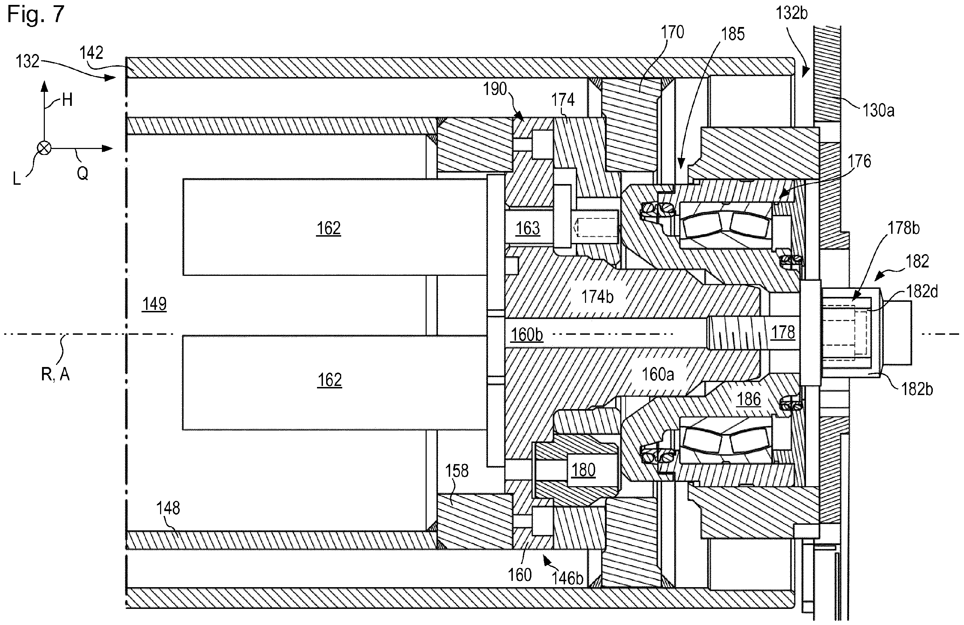

Bevorzugt ist die Seitenwand 30a als Seitentür 30a schwenkbar am Maschinenrahmen 12 vorgesehen, um durch einfaches Auf- und Zuschwenken die Antriebsformation 46 oder/und die Fräswalze 32 im Inneren des Fräswalzenkastens 30 zugänglich machen zu können. Bevorzugt ist die Seitentür 30a um eine zur Maschinenhöhenrichtung H parallele Schwenkachse schwenkbar, da dann das Schwenken der Seitentür 30a in keinem Schwenksinn gegen die Schwerkraft erfolgen muss. Bevorzugt ist das Loslager 76 als Loslagerbaugruppe 85 gemeinsam mit dem weiter unten erläuterten Hilfsbauteil 86 derart an der Seitentür 30a gelagert, dass das Loslager, insbesondere als Loslagerbaugruppe 85, gemeinsam mit der Seitentür 30a verschwenkbar ist. Ein Öffnen der Seitentür 30a zieht dabei das Loslager 76, insbesondere die Loslagerbaugruppe 85, axial von dem durch das Loslager 76 gelagerten Lagerzapfen ab. Dies kann, wie es bevorzugt ist, der Lagerzapfen 74a sein, welcher mit dem Verbindungsflansch 74 verbunden ist. Dies kann auch der weiter unten im Zusammenhang mit dem in Figur 7 gezeigten zweiten Ausführungsbeispiel beschriebene Lagerzapfen (Zentrierzapfen) 160a sein, welcher vom Deckel 160 der Antriebsformation 146 axial auskragt und den Verbindungsflansch 174 durchsetzt.

Weiter bevorzugt ist die Entfernung der Seitentür-Schwenkachse von der Seitentür 30a größer als der Radius des in Figur 2 gezeigten Schnittkreiszylinders der Fräswalze 32, damit die Kreisbahn des Loslagers 76 bzw. der Loslagerbaugruppe 85 beim gemeinsamen Verschwenken mit der Seitentür 30a einen möglichst großen Radius und somit eine möglichst geringe Krümmung aufweist. Dadurch wird das Abziehen bzw. Aufschieben des Loslagers 76, insbesondere der Loslagerbaugruppe 85, vom Lagerzapfen, welcher die Fräswalze 32 zur Drehung um ihre Rotationsachse R lagert, bzw. auf diesen Lagerzapfen erleichtert.

Wie ausführlicher zu der vergrößerten Darstellung des loslagerseitigen Längsendes der Antriebsformation in Figur 3 erläutert werden wird, ist die Fräswalze 32 an der Antriebsformation 46 durch lediglich eine einzige zentrale Sicherungsschraube 78 in ihrer axialen Position gesichert. Die Sicherungsschraube 78 bildet eine Schraubanordnung der vorliegenden Anmeldung.

Die Fräswalze 32 ist somit am Gegenabstützkonus 51 und am Verbindungsflansch 74 koaxial zur Antriebsachse A an der Antriebsformation 46 abgestützt.

In Figur 3 weisen der Tragring 58, der Deckel 60 und der Verbindungsflansch 74 eine von der Darstellung in Figur 2 geringfügig abweichende Gestalt auf. Jedoch unterscheiden sich die Gestalten der genannten Bauteile von der Darstellung in Figur 2 nicht insoweit, als dass diese Unterschiede Einfluss auf die Realisierung der vorliegenden Erfindung hätten.

Der Hydraulikzylinder 62 mit seiner Kolbenstange 63 ist in Figur 3 der Übersichtlichkeit halber weggelassen. Ebenfalls sind die Schraubbolzen 72 zur Verbindung des Verbindungsflansches 74 mit dem Verbindungsring 70 der Übersichtlichkeit halber nicht dargestellt.

Am Deckel 60 ist, vorzugsweise einstückig mit diesem, eine Zentrierformation 60a in Gestalt eines Zentrierzapfens ausgebildet, welcher vom Deckel 60 in Richtung vom festlagerseitigen Längsende der Antriebsformation 46 weg, zum Sicherungsaxialende 32b der Fräswalze 32 hin absteht. Der Zentrierzapfen 60a ragt in eine als Zentrierausnehmung ausgebildete Gegenzentrierformation 74b am Verbindungsflansch 74 ein und zentriert so das starr mit dem Verbindungsflansch 74 verbundene Fräswalzenrohr 42 bezüglich der Antriebsachse A. Der Verbindungsflansch 74 ist daher ein in der Beschreibungseinleitung genanntes Zentrierbauteil. Der Deckel 60 weist eine zentrale, ihn axial durchsetzende Ausnehmung 60b auf, welche von der Kolbenstange 63 in Figur 2 axial durchsetzbar ist.

Auf dem dem Sicherungsaxialende 32b zugewandten Endbereich des Zentrierzapfens 60a ist die Ausnehmung 60b im Zentrierzapfen 60a mit einem Innengewinde versehen, in welches die zentrale Sicherungsschraube 78 eingedreht ist.

Wenngleich die Schraubanordnung anstelle einer einstückigen Sicherungsschraube 78 auch mehrteilig ausgeführt sein kann, beispielsweise durch eine Gewindestange und eine Sicherungsmutter, gegebenenfalls mit einer Unterlegscheibe, ist die einstückige Schraubanordnung in der in Figur 3 gezeigten Gestalt wegen ihrer einfachen und sicheren Handhabung und Verstaubarkeit bevorzugt. Die zentrale Sicherungsschraube 78 umfasst einen Gewindeschaft 78a mit Außengewinde und einen radial über den Gewindeschaft 78a vorstehenden Schraubenkopf 78b mit einer an sich bekannten Werkzeugangriffsformation 78c, beispielhaft in Gestalt eines AußenSechskant-Polyeders. Zwischen dem Gewindeschaft 78a und der Werkzeugangriffsformation 78c ist ein Anlageabschnitt 78d als axial schmaler, radial jedoch ausladender Zylinder ausgebildet. Dieser Anlageabschnitt 78d ist im vorliegenden Beispiel einstückig mit Gewindeschaft 78a und Werkzeugangriffsformation 78c ausgebildet, kann jedoch alternativ auch als gesonderte Unterlegscheibe vorgesehen sein.

Der Schraubenkopf 78b spannt so den Lagerzapfen 74a und mit diesem den Verbindungsflansch 74 und wiederum mit diesem den Verbindungsring 70 und das Fräswalzenrohr 42 axial gegen den Stützkonus 50 der Antriebsformation 46.

Somit kann, wenn die Fräswalze 32 axial zwar mit Entfernung von ihrer Betriebsposition, jedoch dennoch mit gewisser Vorpositionierung angeordnet wird, etwa derart, dass das vom Tragring 58 fern liegende Längsende des Zentrierzapfens 60a bereits in die Zentrierausnehmung 74b des Verbindungsflansches 74 einragt, die Fräswalze 32 mit der Zentrierschraube 78 axial in ihre Betriebsposition bewegt werden. Es ist lediglich darauf zu achten, dass am Deckel 60 mit radialem Abstand von der Antriebsachse A vorgesehene Zapfen 80 in hierfür vorgesehene Ausnehmungen 74c des Verbindungsflansches 74 gelangen können, um so den Deckel 60 mit dem Verbindungsflansch 74 zur Übertragung von Drehmoment zwischen der Antriebsformation 46 und der Fräswalze 32 zu koppeln.

Für das axiale "Aufziehen" bzw. Aufspannen der Fräswalze 32 auf die Antriebsformation 46 mittels der Sicherungsschraube 78 reicht ein verhältnismäßig geringes Drehmoment aus, welches mit herkömmlichen Drehmomentschlüsseln oder auch mechanisierten Drehmomentschlüsseln über die Werkzeugangriffsformation 78c in die Sicherungsschraube 78 eingeleitet werden kann.

Alternativ zum Aufziehen bzw. Aufspannen der Fräswalze 32 auf die Antriebsformation 46 mittels der Sicherungsschraube 78 kann die Fräswalze 32 auch durch die schwenkbare Seitentür 30a auf die Antriebsformation 46 aufgeschoben werden. Während dieses Aufschiebens wird nicht nur die Gegenzentrierformation 74b auf den Zentrierzapfen 60a aufgeschoben, sondern bevorzugt auch das Loslager 76, insbesondere die Loslagerbaugruppe 85, auf den Lagerzapfen 74a.

Zur Erleichterung des im vorherigen Absatz geschilderten Verbringens der Fräswalze 32 in eine betriebsbereite Position alleine durch Schwenken der Seitentür 30a in ihre in den Figuren 3, 6, 7 und 10 gezeigte Schließstellung, in welcher sie den Fräswalzenkasten 30 verschließt, weist die Bodenbearbeitungsmaschine 10 bevorzugt einen Aktuator auf, welcher ein Verschwenken der Seitentür 30a wenigstens in eine Bewegungsrichtung und wenigstens in einem die Schließstellung enthaltenden Bewegungsbereich unterstützt. Besonders bevorzugt handelt es sich dabei um einen Bewegungsendbereich bei der Bewegung der Seitentür 30a in die Schließstellung. Somit kann die zum Aufschieben der Fräswalze 32 auf die Antriebsformation 46 benötigte Kraft und ebenso die zum Aufschieben des Loslagers 76 bzw. der Loslagerbaugruppe 85 auf den Lagerzapfen 74a benötigte Kraft von dem Aktuator ganz oder wenigstens teilweise aufgebracht werden. Ein solcher Aktuator kann beispielsweise eine oder mehrere Kolben-Zylinder-Anordnungen aufweisen. Dabei ist bevorzugt der Zylinder am Maschinenrahmen 12 angelenkt. Bei ausgefahrener Kolbenstange kann dann, wenn die Seitentür 30a einer Eingriffsformation der Kolbenstange ausreichend angenähert wurde, die Seitentür 30a mit der Eingriffsformation der Kolbenstange in Eingriff gebracht werden, vorzugsweise in einen eine besonders hohe kraftübertragenden Formschlusseingriff, sodass dann die eine oder mehreren Kolben-Zylinder-Anordnungen die restliche Schließbewegung der Seitentür 30a wenigstens unterstützen, vorzugsweise selbsttätig ausführen.

Bevorzugt kann der Aktuator die Schwenkbewegung der Seitentür 30a gemeinsam mit dem Loslager 76 bzw. mit der Loslagerbaugruppe 85 auch in einem Bewegungsanfangsbereich der Schwenkbewegung der Seitentür 30a aus der Schließstellung zur Zugangsstellung hin unterstützen oder sogar ausführen, über welchen Bewegungsanfangsbereich hinweg das Loslager 76, insbesondere die Loslagerbaugruppe 85, vom Lagerzapfen 74a abgezogen wird. Der Aktuator kann auch ein elektromechanischer Aktuator sein.

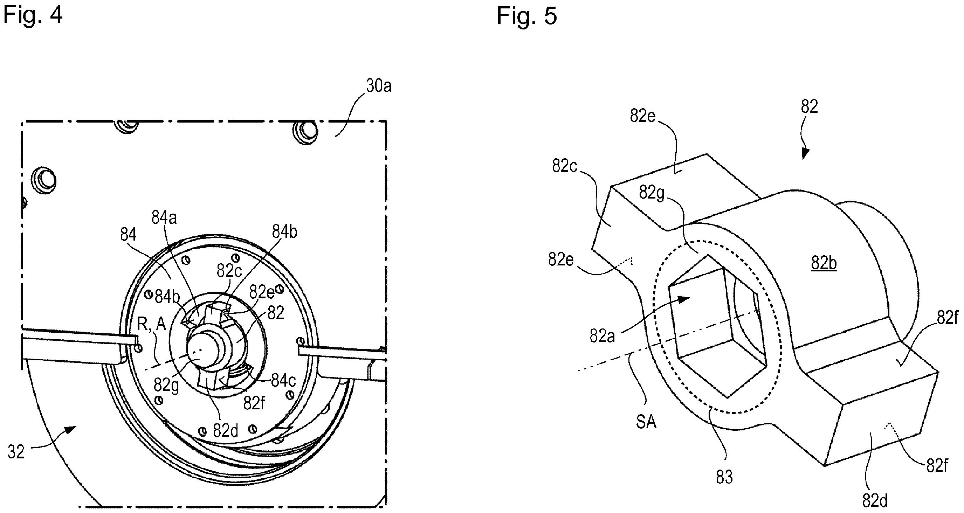

Ein Sicherungsmoment zur axialen Positionssicherung der Fräswalze 32 an der Antriebsformation 46 durch die Sicherungsschraube 78 ist jedoch um Größenordnungen höher. Dieses wird gemäß der vorliegenden Erfindung wie in Figur 4 dargestellt in die Sicherungsschraube 78 eingeleitet.

In den Figuren 4 und 5 ist eine zum Herstellen und Lösen einer axialen Positionssicherung der Fräswalze 32 an der Antriebsformation 46 verwendete Schraubmoment-Abstützanordnung 82 dargestellt. Die Schraubmoment-Abstützanordnung 82 erstreckt sich längs einer Bauteilachse SA, welche bei auf die Sicherungsschraube 78 aufgesteckter Schraubmoment-Abstützanordnung 82 koaxial mit der Antriebsachse A ist.

Die Schraubmoment-Abstützanordnung 82 ist als Überwurfwerkzeug mit einem Eingriffsbereich 82a ausgebildet (siehe Figur 5), welcher im dargestellten Beispiel als Ausnehmung in zur Werkzeugangriffsformation 78c der Sicherungsschraube 78 komplementärer Gestalt ausgebildet ist, in diesem Falle also als Innen-Sechskant-Polyeder. Die Schraubmoment-Abstützanordnung 82 kann somit axial mit ihrem Eingriffsbereich 82a auf den Schraubenkopf 78b der Sicherungsschraube 78 aufgesteckt werden. Somit ist zwischen der Schraube 78 und der Schraubmoment-Abstützanordnung 82 ein Drehmoment formschlüssig übertragbar.

Die Werkzeugangriffsformation 78c der Sicherungsschraube 78 bildet somit einen Gegeneingriffsbereich des Eingriffsbereichs 82a.

Der Eingriffsbereich 82a ist an einem Eingriffsabschnitt 82b der Schraubmoment-Abstützanordnung 82 vorgesehen. Von diesem Eingriffsabschnitt 82b stehen in diametraler Gegenüberstellung beispielhaft zwei Vorsprünge 82c und 82d radial (bezüglich der Bauteilachse SA) vor.

In dem in Figur 4 gezeigten auf die zentrale Sicherungsschraube 78 aufgesteckten Zustand der Schraubmoment-Abstützanordnung 82 ist die Schraubmoment-Abstützanordnung 82 radial außen von einem Gegenabstützbauteil 84 umgeben, welches fest mit der Seitenplatte 30a des Fräswalzenkastens 30 verbunden ist, etwa durch Verschraubung. Im dargestellten Ausführungsbeispiel ist das Gegenabstützbauteil 84 dauerhaft an der Seitenplatte 30a angeordnet.

Das Gegenabstützbauteil 84 weist eine zentrale Ausnehmung 84a auf, durch welche hindurch der Kopf 78b der Sicherungsschraube 78 von außen, also von außerhalb des Maschinenkörpers 13, axial für ein Aufstecken der Schraubmoment-Abstützanordnung 82 darauf und ein Abziehen davon zugänglich ist.

Die Ausnehmung 84a ist radial geringfügig und in Umfangsrichtung wesentlich größer als die entsprechenden radialen bzw. Umfangsabmessungen des Eingriffsabschnitts 82b mit den Vorsprüngen 82c und 82d. Dadurch kann unabhängig von der aktuellen Drehstellung der sich im Betrieb mit der Fräswalze 32 mitdrehenden zentralen Sicherungsschraube 78 stets die Schraubmoment-Abstützanordnung 82 auf die Sicherungsschraube aufgesteckt werden. Da bei einer Außen-Sechskant-Werkzeugangriffsformation die einzelnen ebenen Flächen der Werkzeugangriffsformation um jeweils 60° gegenüber ihrer in Umfangsrichtung nächstgelegenen Angriffsfläche verdreht sind, erstreckt sich die Ausnehmung 84a in dem die Vorsprünge 82c und 82d aufnehmenden Umfangsbereich um bevorzugt wenigstens 60°.

Die in Umfangsrichtung weisenden Flächen 82e des Vorsprungs 82c und die in Umfangsrichtung weisenden Flächen 82f des Vorsprungs 82d bilden Abstützbereiche der Schraubmoment-Abstützanordnung 82, von welchen die Flächen 82e an den Flanken 84b und die Flächen 82f an den Flanken 84c zur Anlage kommen können, die jene Bereiche der Ausnehmung 84a in Umfangsrichtung begrenzen, in welchen bei aufgesteckter Schraubmoment-Abstützanordnung 82 die Vorsprünge 82c und 82d aufgenommen sind. Die beiden in Umfangsrichtung weisenden Flanken 84b und die beiden in Umfangsrichtung weisenden Flanken 84c der Ausnehmung 84a bilden somit Gegenabstützbereiche des Gegenabstützbauteils 84.

Somit ist es möglich, im Bedarfsfall die Schraubmoment-Abstützanordnung 82 ohne weitere Vorbereitungshandlung axial auf den Schraubenkopf 78b aufzustecken und die Antriebsformation 46 in Drehung um die Antriebsachse A zu versetzen. Dies kann entweder geschehen durch die Brennkraftmaschine 39 und die Antriebsdrehmoment-Übertragungsanordnung 54 oder durch einen in den Figuren nicht dargestellten Drehantrieb, welcher über eine Kopplungsformation 57 an die Riemenscheibe 55 und somit mittelbar an die Antriebsformation 46 zur Drehmomentübertragung ankoppelbar ist. Lediglich der Vollständigkeit halber sei angemerkt, dass die Kopplungsformation 57 an einer beliebigen Stelle der Antriebsdrehmoment-Übertragungsanordnung 54 vorgesehen sein kann, solange nur durch Betätigung der Kopplungsformation 57 die Antriebsformation in Drehung um die Antriebsachse A versetzbar ist. Der an die Kopplungsformation 57 ankoppelbare Drehantrieb kann auch ein manueller Drehantrieb sein.

Durch das zwischen der Antriebsdrehmoment-Übertragungsanordnung 54 oder der Kopplungsformation 57 einerseits und dem Deckel 60 bzw. dessen Zentrierzapfen 60a im Getriebegehäuse 52 andererseits angeordnete Planetengetriebe kann mit verhältnismäßig geringem eingangsseitigen Drehmoment, etwa im Bereich von 250 bis 300 Nm, aufgrund der hohen Drehmomentübersetzung des Planetengetriebes an dem das Innengewinde für die Sicherungsschraube 78 tragenden Zentrierzapfen 60a ein Drehmoment von mehr als 2.500 Nm oder sogar von mehr als 3.000 Nm erreicht werden.

Nach Aufstecken der Schraubmoment-Abstützanordnung 82 auf die Sicherungsschraube 78 gelangen durch Drehung der Antriebsformation 46 die Flanken 82e und 82f - je nach Drehsinn der Drehbewegung der Antriebsformation 46 - in Anlage an die in Umfangsrichtung weisenden Flanken 84b, 84c der Ausnehmung 84a des Gegenabstützbauteils 84. Aufgrund des Formschlusseingriffs des Eingriffsbereichs 82a mit dem Schraubenkopf 78b der Sicherungsschraube wird ein auf der Festlagerseite der Antriebsformation 46 in die Antriebsformation 46 eingeleitetes Antriebsdrehmoment durch Formschlussanlage zwischen den Vorsprüngen 82c und 82d und dem Gegenabstützbauteil 84 auf der Loslagerseite der Antriebsformation 46 abgestützt. Somit ist sichergestellt, dass es bei fortgesetztem Drehantrieb der Antriebsformation 46 zu einer Relativdrehung zwischen der Sicherungsschraube 78 und der Antriebsformation 46 und damit zu einer Schraubbewegung der Sicherungsschraube 78 relativ zur Antriebsformation 46, im dargestellten Beispiel: relativ zum Zentrierzapfen 60a, kommt. Die Sicherungsschraube 78 kann somit durch die abstützende Wirkung der Schraubmoment-Abstützanordnung 82 im Zusammenwirken mit dem Gegenabstützbauteil 84 mit extrem hohem Drehmoment angezogen bzw. gelöst werden.

Die Herstellung bzw. das Lösen der axialen Positionssicherung der Fräswalze 32 relativ zur Antriebsformation 46 kann mit Ausnahme der Schraubmoment-Abstützanordnung 82 werkzeugfrei erfolgen.

Das Gegenabstützbauteil 84 kann dauerhaft am Maschinenkörper 13, genauer an der stirnseitigen Seitenwand 30a des Fräswalzenkastens 30, verbleiben.

Figur 4 zeigt dabei einen Blick auf die sogenannte Nullseite der Bodenbearbeitungsmaschine 10, das ist die in Figur 1 vom Betrachter abgewandte Seite der Maschine 10. Der Betrachter blickt in Figur 1 auf die entgegengesetzte sogenannte Antriebsseite der Maschine 10. Im betriebsbereiten Zustand der Maschine 10 liegt das Antriebsaxialende 32a der Fräswalze 32 der Antriebsseite der Maschine 10 näher und liegt das Sicherungsaxialende 32b der Nullseite näher. Die Nullseite der Bodenbearbeitungsmaschine 10 ist üblicherweise die in Vorwärtsfahrtrichtung rechte Maschinenseite.

Nach Herstellung der axialen Positionssicherung kann die Antriebsformation 46 ein kleines Stück im entgegengesetzten Drehsinn angetrieben werden, um die Anlage zwischen den Flanken 82e, 82f der Vorsprünge 82c und 82d der Schraubmoment-Abstützanordnung 82 und den Flanken 84b, 84c des Gegenabstützbauteils 84 zu lösen, sodass die Schraubmoment-Abstützanordnung 82 mit geringer Kraft manuell von der Sicherungsschraube 78 axial abgezogen werden kann.

In Figur 5 zeigt die gestrichelte Linie 83 eine mögliche körperliche Trennung zwischen dem die Vorsprünge 82c und 82d aufweisenden Eingriffsabschnitt 82b und einem radial inneren, den Eingriffsbereich 82a aufweisenden Kernabschnitt 82g. Der Eingriffsabschnitt 82b und der Kernabschnitt 82g können durch eine von den genannten Abschnitten verborgene Prüfvorrichtung verbunden sein, die dazu ausgebildet ist, das zwischen dem Eingriffsabschnitt 82b und dem Kernabschnitt 82g übertragene Drehmoment überprüfbar zu machen. Beispielsweise kann die Prüfvorrichtung eine Rutschkupplung sein, die eine Drehmomentübertragung zwischen dem Eingriffsabschnitt 82b und dem Kernabschnitt 82g nur bis zu einem vorbestimmten oder durch Einstellungshandlung vorbestimmbaren Grenzmoment zulässt oder/und die Prüfvorrichtung kann bei Erreichen des Grenzmoments ein Signal ausgeben, etwa ein Geräusch, beispielsweise ein von mechanischen Drehmomentschlüsseln her bekanntes Klacken.

Die Schraubmoment-Abstützanordnung kann jedoch auch einstückig ausgebildet sein.

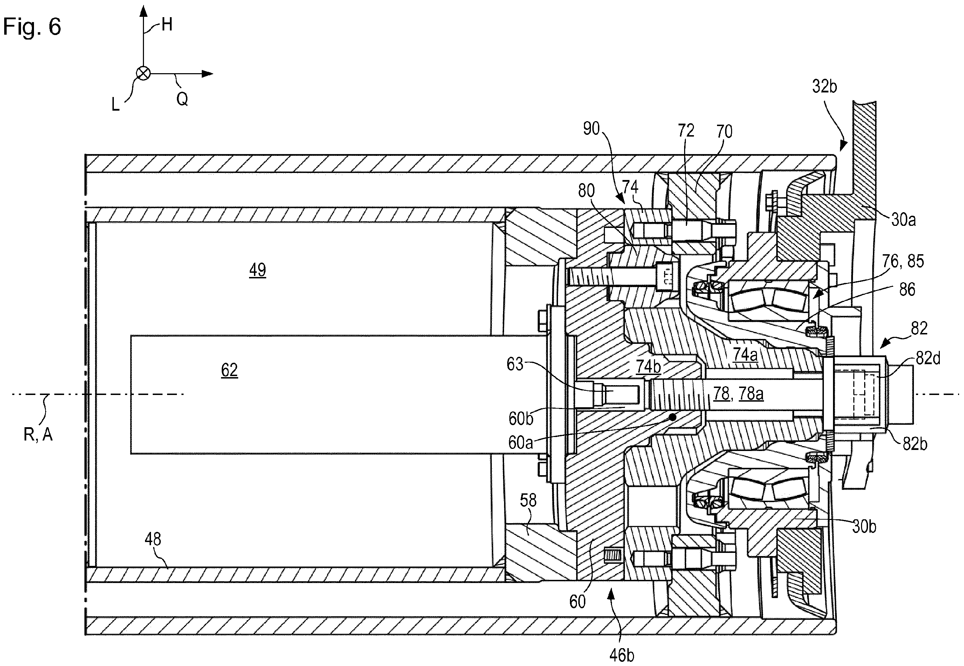

Figur 6 zeigt die Ansichten der Figuren 2 und 3 mit auf den Schraubenkopf 78b aufgesteckter Schraubmoment-Abstützanordnung 82. Die Schraubmoment-Abstützanordnung 82 ist nicht geschnitten.

Der Vorsprung 82d erstreckt sich dabei orthogonal von der Zeichenebene der Figur 6 zum Betrachter hin. Der Vorsprung 82c liegt in Figur 6 hinter der Zeichenebene und wird durch den Eingriffsabschnitt 82b verdeckt. Das Gegenabstützbauteil ist in Figur 6 nicht gezeigt.

In Figur 7 ist eine zweite Ausführungsform der Arbeitsbaugruppe 28 gezeigt.

Gleiche und funktionsgleiche Bauteile und Bauteilabschnitte wie in der ersten Ausführungsform sind in der zweiten Ausführungsform mit gleichen Bezugszeichen versehen, jedoch erhöht um die Zahl 100. Die zweite Ausführungsform von Figur 7 wird nachfolgend nur insofern erläutert, als sie sich in einem für die Erfindung wesentlichen Umfang von der ersten Ausführungsform unterscheidet.

Wesentliche Änderung der zweiten Ausführungsform gegenüber der bisher beschriebenen ersten Ausführungsform ist die Gestalt des Zentrierzapfens 160a, welcher sowohl bezüglich des Verbindungsflansches 174 der Fräswalze 132 als Zentrierformation wirkt, als auch bezüglich des Loslagers 176 als Lagerzapfen dient.

Die Gegenzentrierformation 174b ist somit wiederum als Ausnehmung ausgebildet. Im Gegensatz zur ersten Ausführungsform ragt der Zentrierzapfen 160a im zweiten Ausführungsbeispiel nicht nur axial in den Verbindungsflansch 174 ein, sondern durchsetzt diesen axial vollständig.

Hierdurch kann die Sicherungsschraube 178 konstruktionsbedingt den Verbindungsflansch 174 nicht mehr unmittelbar mit Axialkraft beaufschlagen und in die Betriebsposition verlagern bzw. die Fräswalze 132 über den Verbindungsflansch 174 axial in der Betriebsposition sichern. Eine Axialkraftübertragung zwischen der Sicherungsschraube 178 und dem starr mit der Fräswalze 132 verbundenen Verbindungsflansch 174 erfolgt in der zweiten Ausführungsform unter Zwischenanordnung eines Hilfsbauteils 186 zwischen dem Schraubenkopf 178b und dem Verbindungsflansch 174. Das Hilfsbauteil 186 ist dabei in vorteilhafter Weise Teil des Loslagers 176 und dient dabei als Abstützbauteil für den Innenring des Wälzlagers des Loslagers 176. Das Hilfsbauteil 186 stützt sich einmal am Schraubenkopf 178b und ein weiteres mal am Verbindungsflansch 174 ab.

Das oben im Zusammenhang mit einem Aufschieben des Loslagers 76 bzw. der Loslagerbaugruppe 85 auf den Lagerzapfen 74a und im Zusammenhang mit einem Abziehen des Loslagers 76 bzw. der Loslagerbaugruppe 85 von dem Lagerzapfen 74a durch eine gemeinsame Schwenkbewegung von Loslager 76 bzw. Loslagerbaugruppe 85 und der Seitentür 30a Gesagte gilt auch für ein solches Aufschieben bzw. Abziehen des Loslagers 176, insbesondere der Loslagerbaugruppe 185, auf den bzw. von dem Zentrierzapfen 160a, welcher mit dem Hilfsbauteil 186 zur Drehlagerung der Fräswalze 132 in gleicher Weise in Wechselwirkung steht wie der Lagerzapfen 74a der ersten Ausführungsform.

In der zweiten Ausführungsform ist außerdem kein zentraler Hydraulikzylinder vorgesehen, sondern es sind mehrere, etwa drei Hydraulikzylinder 162 mit, vorzugsweise gleichem, radialem Abstand von der Antriebsachse A in Umfangsrichtung, vorzugsweise äquidistant, um die Antriebsachse A herum verteilt angeordnet. Da jeder der Hydraulikzylinder 162 nur noch ein Drittel der ursprünglich vom zentralen Hydraulikzylinder 162 alleine aufzubringenden Kraft liefern muss, können die Hydraulik-zylinder 162 in vorteilhafter Weise kleiner ausfallen als der zentrale Hydraulikzylinder 162 der ersten Ausführungsform. Dafür ist im Gegenzug ihre Anzahl größer.

Mit den Hydraulikzylindern 162 kann unter Anordnung von entsprechenden Hintergriffsbauteilen am freien Längsende der Kolbenstange 163 (nicht dargestellt) wiederum die Fräswalze 132 axial in Richtung zur Betriebsposition hin, bevorzugt in die Betriebsposition bewegt werden. Ebenso kann die Fräswalze 132 axial hydraulisch aus der Betriebsposition heraus bewegt werden.

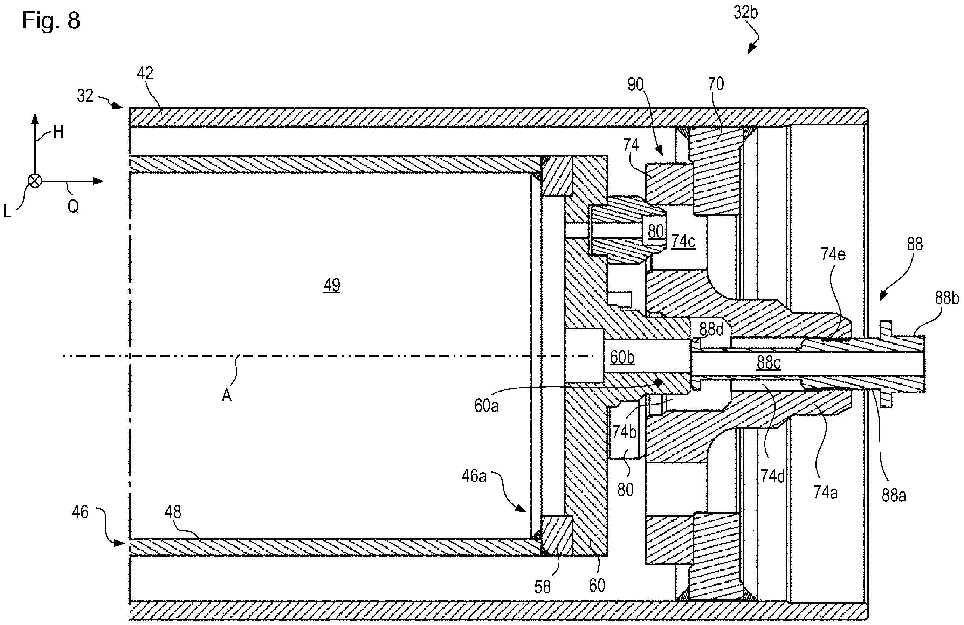

In Figur 8 ist, wiederum anhand des ersten Ausführungsbeispiels, die vorteilhafte Anwendung eines Lösebauteils 88 gezeigt. Mithilfe des Lösebauteils 88 kann durch einen einzigen zentralen Kraftangriff die Fräswalze 32 axial aus ihrer Betriebsposition von dem festlagerseitigen Längsende 46a der Antriebsformation 46 weg gelöst und abgezogen werden. Das Lösebauteil 88 kann daher alternativ zu dem oder den Hydraulikzylindern 62 bzw. 162 verwendet werden, um die Fräswalze 32 aus der Betriebsposition heraus zu bewegen.

Durch den Einsatz des Lösebauteils 88 in Figur 8 wurde das Fräswalzenrohr 42 und damit die Fräswalze 32 bereits axial aus der Betriebsposition bewegt, sodass der Zentrierzapfen 60a als Zentrierformation die Gegenzentrierformation 74b am Verbindungsflansch 74 nicht mehr zentriert. Daher ist das Fräswalzenrohr 42 nicht mehr mit der Antriebsachse A der Antriebsformation 46 koaxial.

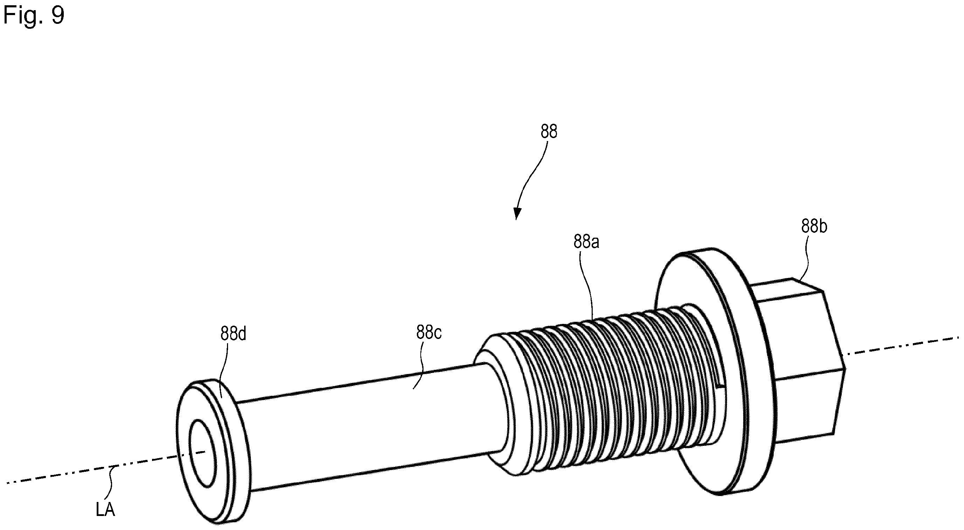

Der Einsatz des Lösebauteils 88 an der Antriebs- bzw. Fräsbaugruppe von Figur 8 wird nicht nur mit Bezug auf Figur 8, sondern auch mit Bezug auf das in Figur 9 in Alleinstellung dargestellte Lösebauteil 88 beschrieben.

Wie in Figur 9 zu erkennen ist, erstreckt sich das Lösebauteil 88 entlang einer Lösebauteilachse LA, welche zu Beginn des Einsatzes des Lösebauteils 88 bevorzugt koaxial mit der Antriebsachse A der Antriebsformation 46 und der Rotationsachse R der Fräswalze 32 ist.

Das Lösebauteil 88 weist eine Kooperationsformation 88a in beispielhafter Gestalt eines Außengewindes auf, welches in den Lagerzapfen 74a des Verbindungsflansches 74 einschraubbar ist. Der Lagerzapfen 74a weist hierzu eine ihn axial durchsetzende Durchgangsöffnung 74d auf, durch welche hindurch die Gegenzentrierformation 74b in Gestalt einer Zentrierausnehmung erreichbar ist. An dem von der Zentrierausnehmung 74b fern liegenden Längsendbereich weist der Lagerzapfen 74a in der Durchgangsöffnung 74d das Innengewinde 74e auf, welches mit dem Außengewinde 88a (Kooperationsformation) des Lösebauteils 88 in Schraubeingriff bringbar ist, um einerseits das Lösebauteil 88 an einem mit der Fräswalze 32 starr verbundenen Bauteil festzulegen und um es andererseits relativ zu diesem axial definiert vortreiben zu können.

An seinem im Einsatzzustand, also bei in das Innengewinde 74e eingeschraubter Kooperationsformation 88a, von der Antriebsformation 46 fern liegenden Längsende weist das Lösebauteil eine Drehmoment-Übertragungsformation 88b auf, beispielsweise in Gestalt einer Außen-Sechskant-Werkzeugangriffsformation oder/und einer Innen-Sechskant-Werkzeugangriffsformation. Bevorzugt sind beide Werkzeugangriffsformationen an der Drehmoment-Übertragungsformation 88b realisiert. An dieser Drehmoment-Übertragungsformation 88b kann während des Einsatzes des Lösebauteils 88 an der Bodenbearbeitungsmaschine 10 Drehmoment in das Lösebauteil 88 eingeleitet werden, um dieses mithilfe der Kooperationsformation 88a axial relativ zur Fräswalze 32 zu bewegen. An die Drehmoment-Übertragungsformation 88b kann ein Drehmomentschlüssel oder ein mechanisierter Drehmomentschlüssel angreifen.

Bei axial entsprechend ausladendem Aufbau des Gegenabstützbauteils oder wenigstens eines mit einem Abstützbereich der Schraubmoment-Abstützanordnung zusammenwirkenden Gegenabstützbereichs kann die Schraubmoment-Abstützanordnung auch zur Drehmomentabstützung des Lösebauteils herangezogen werden. Dann kann das Abdrücken der Arbeitsvorrichtung von der Antriebsformation mit Ausnahme von Lösebauteil und Schraubmoment-Abstützanordnung werkzeugfrei erfolgen. Zumindest muss das zum Abdrücken erforderliche Drehmoment nicht notwendigerweise manuell durch eine Bedienperson aufgebracht werden. Vorteilhafterweise weist daher das Lösebauteil eine mit dem Schraubbauteil der Schraubanordnung, hier: Sicherungsschraube 78, identische Werkzeugangriffsformation (hier: Drehmoment-Übertragungsformation 88b) auf, so dass der Eingriffsbereich der Schraubmoment-Abstützanordnung auch auf die Werkzeugangriffsformation des Lösebauteils passt.

An dem von der Drehmoment-Übertragungsformation 88b entgegengesetzten Längsende der Kooperationsformation 88a schließt an dieser ein Schaftabschnitt 88c an. Der Schaftabschnitt 88c ist zur Verringerung des Gewichts des Lösebauteils 88 bevorzugt rohrförmig, also radial innen hohl ausgebildet. An dem der Kooperationsformation 88a entgegengesetzten Längsende des Schaftabschnitts 88c weist das Lösebauteil 88 einen Anlageabschnitt 88d auf, welcher beispielsweise als radial über den Schaftabschnitt 88c hinaus vorstehende Scheibe, insbesondere Ringscheibe, ausgebildet sein kann. Mit dem Anlageabschnitt 88d ist das Lösebauteil 88 durch Vortrieb in Anlageeingriff mit der Antriebsformation 46, hier insbesondere in Anlageeingriff mit einem Längsendbereich des Zentrierzapfens 60a des Deckels 60, bringbar. Das Innengewinde 74e ist somit eine Befestigungs- oder/und Vortriebsformation im Sinne der Beschreibungseinleitung.

Ist der Anlageeingriff zwischen dem Anlageabschnitt 88d und der Antriebsformation 46 hergestellt, kann durch weitere Drehmomenteinleitung an der Drehmoment-Übertragungsformation 88b das die Befestigungs- oder/und Vortriebsformation 74e aufweisende, der fest mit der Fräswalze 32 bzw. dem Fräswalzenrohr 42 verbundene Verbindungsflansch 74 relativ zur Antriebsformation 46 axial in Bewegung versetzt werden.

Je nach Bewegungs- und Kraftübertragung zwischen der Kooperationsformation 88a und der Befestigungs- oder/und Vortriebsformation 74e, etwa abhängig von der Steigung der verwendeten Gewinde, kann am Ort des Anlageeingriffs des Anlageabschnitts 88d an der Antriebsformation 46 eine hohe Axialkraft erzeugt werden, mit welcher auch eine schmutzverbackene Fräswalze 32 axial von der Antriebsformation 46 gelöst werden kann.

Ist eine solche Schmutzverbackung erst einmal gelöst, ist also die Fräswalze 32 relativ zur Antriebsformation 46 axial gangbar gemacht, ist der zur axialen Entfernung der Fräswalze 32 von der Antriebsformation 46 notwendige Kraftaufwand auf das zur Bewegung der massereichen Bauteile bekannte übliche Maß reduziert und kann mit üblichen an sich bekannten Methoden bewältigt werden.

Wie in Figur 8 zu sehen ist, kann das Lösebauteil 88 auch durchgängig hohl ausgeführt sein, also als Rohr-Lösebauteil, sodass auch während eines Einsatzes des Lösebauteils 88 durch eine das Lösebauteil 88 längs ihrer Lösebauteilachse LA durchsetzende Öffnung die Antriebsformation 46 oder wenigstens Bauteile hiervon zugänglich sein können. Das Lösebauteil 88 ist, ebenso wie die Schraubmoment-Abstützanordnung 82, bevorzugt einstückig ausgebildet.

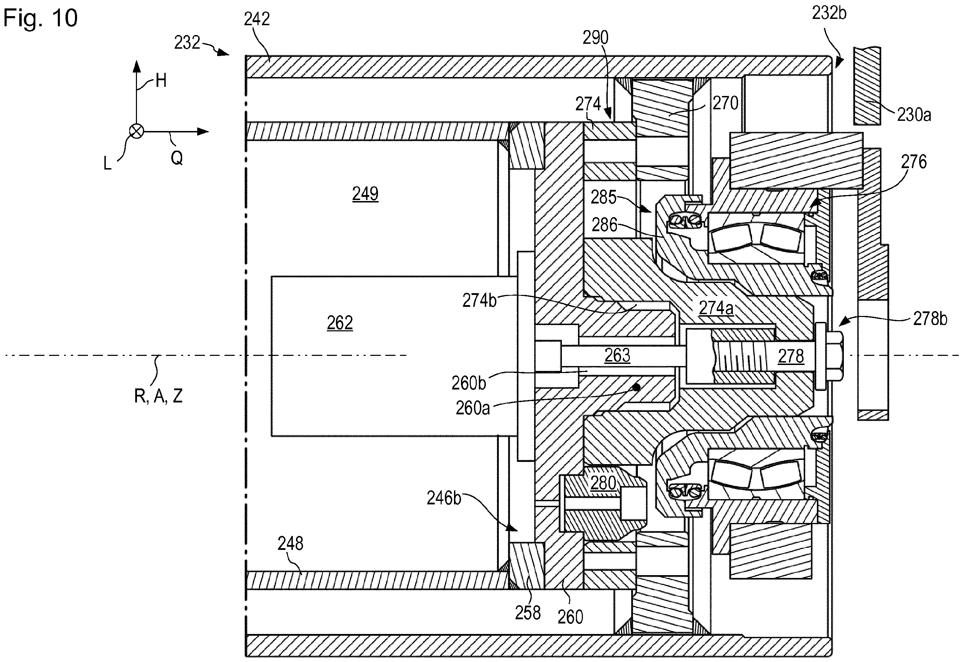

In Figur 10 ist abschließend eine dritte Ausführungsform gezeigt, die lediglich darstellen soll, dass die zentrale Sicherungsschraube 278 auch mit der Kolbenstange 263 des Hydraulikzylinders 262 zur axialen Positionssicherung der Fräswalze 32 an der Antriebsformation 46 verschraubt sein kann.

Gleiche und funktionsgleiche Bauteile und Bauteilabschnitte wie in der ersten Ausführungsform sind in der dritten Ausführungsform mit gleichen Bezugszeichen versehen, jedoch erhöht um die Zahl 200. Die dritte Ausführungsform von Figur 10 wird vorliegend nur insofern erläutert, als sie sich in einem für die Erfindung wesentlichen Umfang von der ersten Ausführungsform unterscheidet.

Die in Figur 10 dargestellte dritte Ausführungsform mit in die Kolbenstange 263 eingedrehter Sicherungsschraube 278 ist selbstverständlich auch auf die Konstruktion der zweiten Ausführungsform anwendbar, bei welcher der Zentrierzapfen 60a und der Lagerzapfen 74a in einem einzigen Bauteil realisiert sind. Dann ist lediglich notwendig, dass sich der Schraubenkopf 278b an einem Kraft vom Schraubenkopf 278b auf ein starr mit der Fräswalze 232 verbundenes Bauteil übertragenden Hilfsbauteil abstützt, wie dies in Figur 7 mit dem Hilfsbauteil 186 der Fall ist. Bevorzugt wird wiederum ein ohnehin vorhandenes Bauteil, beispielsweise ein Teil des Loslagers 276, als Hilfsbauteil verwendet.

Die Lösung der dritten Ausführungsform gemäß Figur 10 hat den Vorteil, dass die Fräswalze 232 mit dem Hydraulikzylinder 262 axial auf die Antriebsformation aufgezogen und in die Betriebsposition verbracht werden kann und ebenso axial von der Antriebsformation 246 abgedrückt und aus der Betriebsposition entfernt werden kann. Die für die axiale Bewegung der Fräswalze 232 notwendigen Axialkräfte werden vom Hydraulikzylinder 262 bereitgestellt, und zwar sowohl für die Montage als auch für die Demontage der Fräswalze 232. Die axiale Positionssicherung mit dem oben genannten sehr hohen Drehmoment erfolgt dann wiederum, wie im Zusammenhang mit den Figuren 4 bis 7 beschrieben, durch die Schraubmoment-Abstützanordnung 82, 182, welche mit dem Gegenabstützbauteil 84 zusammenwirkt und mit einer Drehmomenteinleitung auf der Festlagerseite der Antriebsformation 246 durch entweder die Brennkraftmaschine 39 oder einen gesonderten, gewünschtenfalls auch manuellen Drehantrieb, welcher - wie oben bereits beschrieben wurde - mit einer Kopplungsformation 57 (siehe Figur 2) der Antriebsdrehmoment-Übertragungsanordnung vorübergehend zur Drehmomentübertragung koppelbar sein kann.

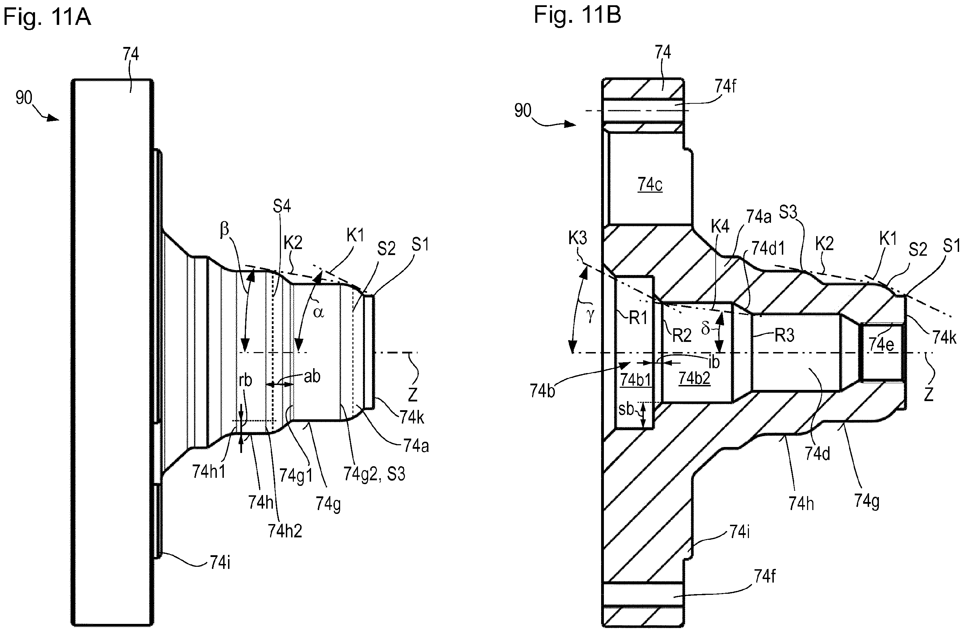

Im Zusammenhang mit den Figuren 11A bis 14 wird nachfolgend eine bevorzugte Gestaltung eines Lagerbauteils 90 beschrieben werden, welche das Aufschieben eines Loslagers 76, 176, 276 insbesondere einer Loslagerbaugruppe 85, 185, 285 auf einen Lagerzapfen 74a, 160a, 274a und ein Abziehen von diesem durch gemeinsame Schwenkbewegung mit einer Seitentür 30a, 130a, 230a erleichtert.

Beispielhaft ist ein Lagerbauteil 90 mit einem Lagerzapfen 74a gezeigt. Die nachfolgend für den Lagerzapfen 74a gemachten Ausführungen gelten auch für die mit der Lagerbaugruppe 185 wechselwirkende Gestalt des Zentrierzapfens 160a.

In Figur 11A ist ein gesondert handelbares Lagerbauteil 90 dargestellt, welches den bereits in Figur 6 dargestellten Verbindungsflansch 74 mit davon auskragenden Lagerzapfen 74a in Alleinstellung in Seitenansicht zeigt. Figur 11B zeigt dasselbe Lagerbauteil 90 in einer Längsschnittansicht, welche die zentrale Lagerzapfenachse Z des Lagerzapfens 74a enthält. In der betriebsbereiten Stellung der Fräswalze 32 fällt die Lagerzapfenachse Z idealerweise mit der Rotationsachse R und der Antriebsachse A kollinear zusammen.

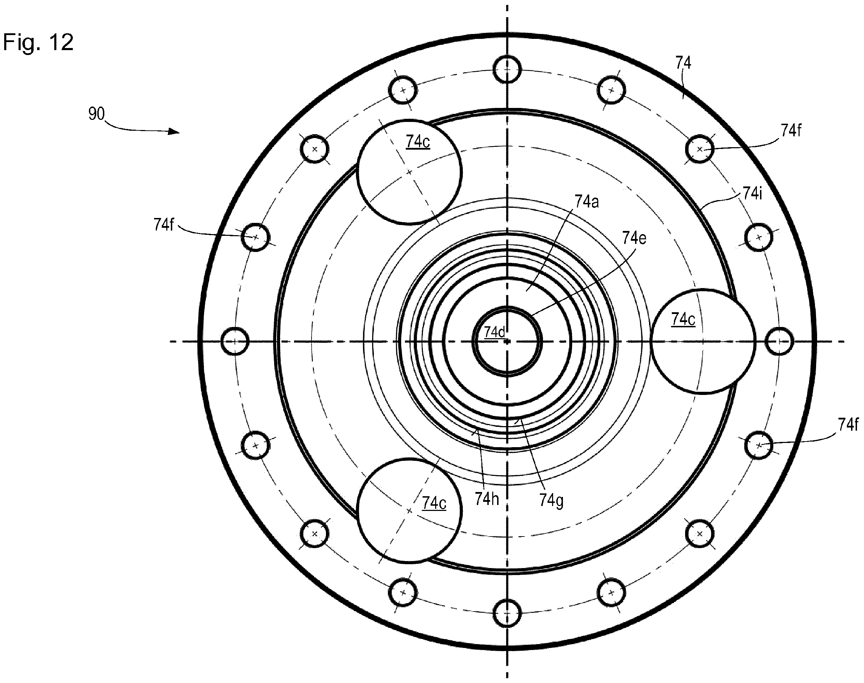

Das vorzugsweise einstückig ausgebildete Lagerbauteil 90 weist radial außen eine Mehrzahl von Durchgangsöffnungen 74f auf, in welche die oben genannten Schraubbolzen 72 eingedreht werden, um den Verbindungsflansch 74 und somit das Lagerbauteil 90 mit dem Verbindungsring 70 und somit mit dem Fräswalzenrohr 42 drehfest zu verbinden. Die Durchgangsöffnungen 74f, welche alternativ, jedoch nicht bevorzugt, auch Sacköffnungen sein können, liegen vorzugsweise alle im selben radialen Abstand von der Lagerzapfenachse Z entfernt und haben vorzugsweise voneinander den gleichen Winkelabstand (siehe Figur 12).

Ebenfalls winkelmäßig äquidistant, jedoch in geringerem Abstand von der Lagerzapfenachse Z als die Durchgangsöffnungen 74f sind vorzugsweise drei Ausnehmungen 74c zur oben beschriebenen formschlüssigen drehmomentübertragenden Aufnahme von mit dem Deckel 60 drehfest verbundenen Zapfen 80 ausgebildet.

Das Lagerbauteil 90 weist auf seiner den Zapfen 74a aufweisenden Seite einen umlaufenden Vorsprung 74i auf, welcher lediglich durch die Ausnehmungen 74c unterbrochen ist. Dieser Vorsprung 74i dient, wie in Figur 6 zu erkennen ist, der Zentrierung des Lagerbauteils 90 bezüglich des Verbindungsrings 70. Aus diesem Grunde reicht eine verhältnismäßig geringe Vorsprungweite für den Vorsprung 74i aus, verglichen mit der Auskragweite des Zapfens 74a.

Der Lagerzapfen 74a weist zwei zylindrische Lagerflächen 74g und 74h, an welchen holzylindrische Gegenlagerflächen der Loslagerbaugruppe 85, genauer des Hilfsbauteils 86, im betriebsbereiten Zustand der Fräswalze 32 umlaufend anliegen. Eine erste zylindrische Lagerfläche 74g ist dabei von dem Verbindungsflansch 74 als einer beispielhaften Auskragstruktur, von welcher ausgehend der Lagerzapfen 74a auskragt, weiter entfernt als die zweite zylindrische Lagerfläche 74h. Mit diesen beiden zylindrischen Lagerflächen kann die Fräswalze 32 ausreichend genau zur Rotation um die Rotationsachse R gelagert werden. Zur Erleichterung des Abziehens der Loslagerbaugruppe 85 vom Lagerzapfen 74a und des Aufschiebens auf diesen mittels einer gemeinsamen Schwenkbewegung der Loslagerbaugruppe 85 mit der Seitentür 30a weist die erste zylindrische Lagerfläche 74g einen geringeren Durchmesser auf als die zweite zylindrische Lagerfläche 74h.

Die beiden zylindrischen Lagerflächen können ganz grundsätzlich eine unterschiedliche axiale Länge aufweisen, wobei dann bevorzugt die durchmesserkleinere zylindrische Lagerfläche, in diesem Falle die Lagerfläche 74g, die axial längere ist.

Weiter bevorzugt ist der axiale Abstand ab zwischen der ersten und der zweiten zylindrischen Lagerfläche 74g bzw. 74h größer ist als der radiale Abstand rb zwischen diesen Flächen.

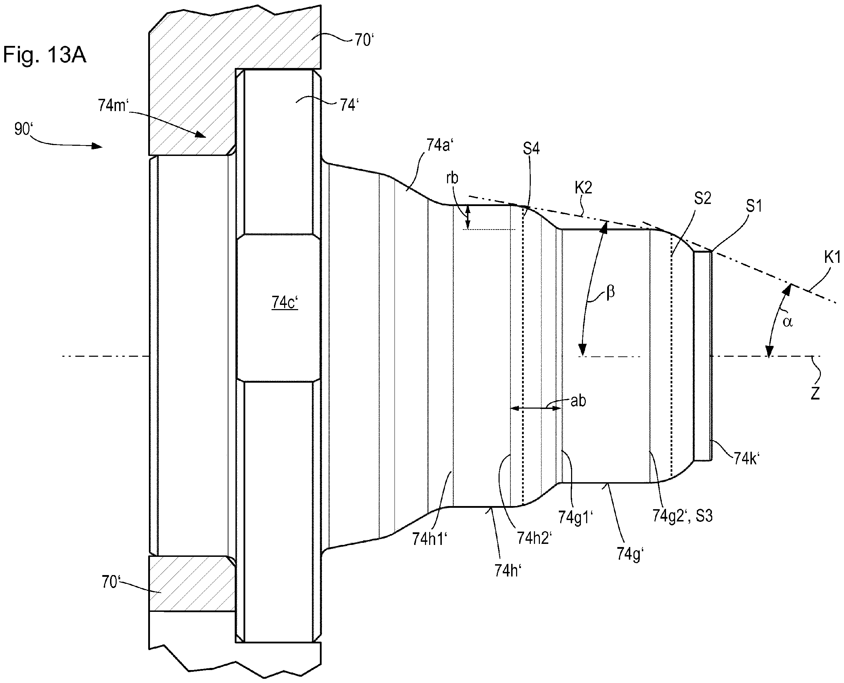

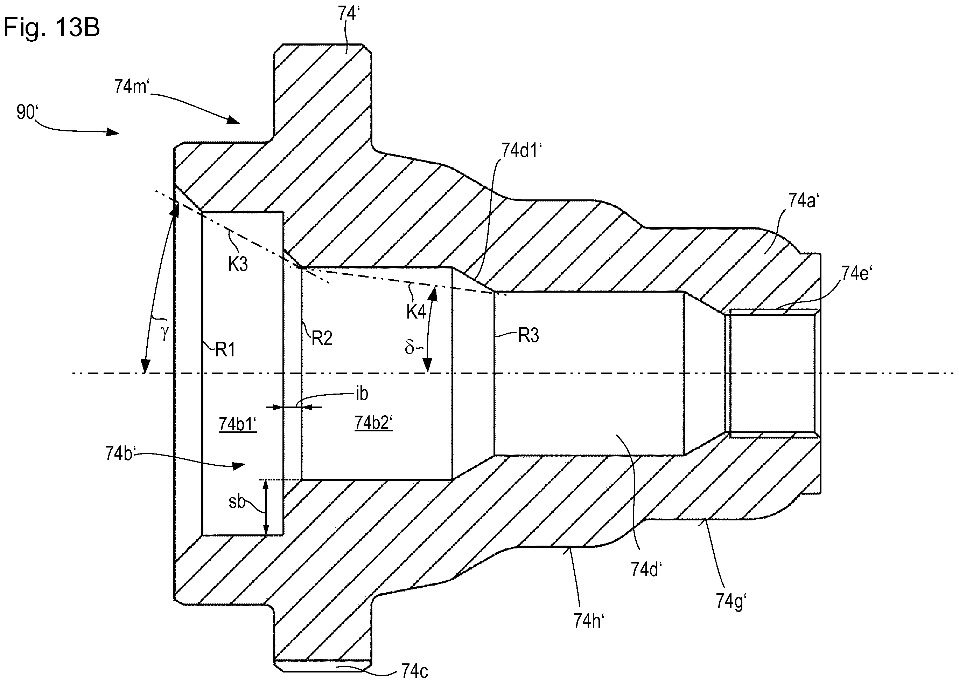

Bevorzugt verjüngt sich der Lagerzapfen 74a zu seinem von der Auskragstruktur 74 fernliegenden freien Längsende 74k hin, wegen der zylindrischen Lagerflächen 74g und 74h in der Regel stufenweise, wobei der Grad an Verjüngung bevorzugt mit zunehmenden Abstand von der Auskragstruktur 74 zunimmt. Dies wird in der in den Figuren 11 und 13 dargestellten bevorzugten Ausführungsform des Lagerbauteils 90 bzw. 90' in dem für ein Aufschieben der Loslagerbaugruppe 85 während einer gemeinsamen Schwenkbewegung mit der Seitentür 30a relevanten Axialabschnitt deutlich, welcher von dem der Auskragstruktur 74 axial näher liegenden Längsende 74h1 der zweiten zylindrischen Lagerfläche 74h bis zum freien Längsende 74k des Lagerzapfens 74a reicht. Dabei kann der Lagerzapfen derart ausgebildet sein, dass der Grad an Verjüngung in einem der Auskragstruktur 74 näher als dem Längsende 74k gelegenen Bereich zunächst mit zunehmenden Abstand von der Auskragstruktur 74 abnimmt und bei Annäherung an das freie axiale Längsende 74k in einem dem Längsende 74k näher als der Auskragstruktur 74 gelegenen Bereich zunimmt.

Dieser Axialabschnitt ist so gestaltet, dass ein erster fiktiver Konus K1 als einen ersten Schmiegekreis S1 eine Außenumfangslinie des freien Längsendes 74k aufweist. An diesem ersten Schmiegekreis S1 liegt der Konus K1 tangential an und erstreckt sich von dort in Richtung zur ersten zylindrischen Lagerfläche 74g. Der Konus K1 liegt tangential an einem zweiten Schmiegekreis S2 auf der Außenoberfläche des Lagerzapfens 74a an. Der Schmiegekreis S2 ist axial zwischen dem ersten Schmiegekreis S1 und dem dem freien Längsende 74k näher gelegenen axialen Ende 74g2 der ersten zylindrischen Lagerfläche 74g gelegen. Der erste fiktive Konus K1 weist einen Öffnungswinkel α auf.

Ein zweiter fiktiver Konus K2 geht aus von dem dem freien Längsende 74k näher gelegenen axialen Ende 74g2 der ersten zylindrischen Lagerfläche 74g als seinem ersten Schmiege- oder Startkreis S3 und erstreckt sich zu einem zweiten Schmiegekreis S4 auf der Außenoberfläche des Lagerzapfens 74a, an welchem der Konus K2 tangential anliegt. Dieser Schmiegekreis S4 ist axial zwischen dem axialen Ende 74g2 und dem dem freien Längsende 74k näher gelegenen axialen Ende 74h2 der zweiten zylindrischen Lagerfläche 74h gelegen. Der zweite fiktive Konus K2 liegt tangential am Schmiegekreis S4, jedoch nicht am Schmiege- bzw. Startkreis S3 an und weist einen Öffnungswinkel β auf.

Der Lagerzapfen 74a ist dabei so ausgestaltet, dass der Öffnungswinkel α des ersten fiktiven Konus K1 größer ist als der Öffnungswinkel β des zweiten fiktiven Konus K2.

Die erste zylindrische Lagerfläche 74g reicht axial von dem der Auskragstruktur näher gelegenen axialen Ende 74g1 bis zu dem dem freien Längsende 74k näher gelegenen axialen Ende 74g2. Weiterhin kann der Abstand zwischen dem dem freien Längsende 74k näher gelegenen axialen Ende 74g2 der ersten zylindrischen Lagerfläche 74g zum freien Längsende 74k selbst kleiner sein als der Abstand der beiden dem freien Längsende 74k näher gelegenen axialen Enden 74h2 und 74g2 voneinander.

Eine ähnliche Konstruktion ist für die Gestaltung der Gegenzentrierformation in Gestalt der Gegenzentrierausnehmung 74b gewählt. Die Gegenzentrierausnehmung 74b weist bevorzugt zwei axial in Auskragrichtung des Lagerzapfens 74a, das ist die Einragrichtung des Zentrierzapfens 60a in die Gegenzentrierausnehmung 74b, hintereinander gelegene Ausnehmungsabschnitte 74b1 und 74b2 auf.

Im betriebsbereiten Zustand der Fräswalze 32 sorgt der durchmessergrößere Haupt-Zentrierausnehmungsabschnitt 74b1, welcher näher beim Antriebsaxialende 32a der Fräswalze 32 gelegen ist, für die Hauptzentrierung des Lagerbauteils 90 und damit des dem Sicherungsaxialende 32b näher gelegenen Axialabschnitts der Fräswalze 32 relativ zur Antriebsformation 46. Ebenso sorgt der weiter vom Antriebsaxialende 32a entfernt gelegene durchmesserkleinere Vor-Zentrierausnehmungsabschnitt 74b2 für eine Vorzentrierung der Fräswalze 32 relativ zur Antriebsformation 46 bevor die Fräswalze 32 ihre Betriebsposition erreicht, etwa in der axial von der Betriebsposition entfernt gelegenen Vorbereitungsposition.

Der Zentrierzapfen 60a weist vorzugsweise ebenso zwei Axialabschnitte mit unterschiedlich großen Durchmessern auf, von welchen sich der durchmessergrößere als Hauptzentrier-Zapfenabschnitt in der Betriebsposition der Fräswalze 32 in Anlage an der Umfangswandung des Haupt-Zentrierausnehmungsabschnitts 74b1 befindet. Der durchmesserkleinere Axialabschnitt des Zentrierzapfens 60a ist als Vorzentrier-Zapfenabschnitt bereits in den Vor-Zentrierausnehmungsabschnitt 74b2 eingetaucht, bevor der Hauptzentrier-Zapfenabschnitt in den Haupt-Zentrierausnehmungsabschnitt 74b1 eingeführt wird. Dabei besteht zwischen dem durchmesserkleineren Vorzentrier-Zapfenabschnitt des Zentrierzapfens 60a und der Umfangswandung des Vor-Zentrierausnehmungabschnitts 74b2 ein größeres Radialspiel als zwischen dem durchmessergrößeren Hauptzentrier-Zapfenabschnitt des Zentrierzapfens 60a und der Umfangswandung des Haupt-Zentrierausnehmungabschnitts 74b1. Somit kann die Zentrierausnehmung 74b sicher und zuverlässig auch dann am Zentrierzapfen 60a zentriert werden, wenn zwischen der Lagerzapfenachse Z und einer zentralen Längsachse des Zentrierzapfens 60a zu Beginn einer Aufschubbewegung der Fräswalze 32 auf die Antriebsformation 46 eine große Lageabweichung besteht.

Um auch eine solche große Lageabweichung zu Beginn der Aufschubbewegung beherrschen zu können, ist bevorzugt der Vor-Zentrierausnehmungsabschnitt 74b2 axial länger ausgebildet als der Haupt-Zentrierausnehmungsabschnitt 74b1. Der Vor-Zentrierausnehmungsabschnitt 74b2 ist dabei bevorzugt um einen Betrag axial länger ausgebildet als der Haupt-Zentrierausnehmungsabschnitt 74b1, welcher größer ist als der Unterschiedsbetrag des radialen Abstands sb der beiden Umfangs Wandungen der Zentrierausnehmungsabschnitte 74b1 und 74b2. Auch der axiale Abstand ib der beiden Zentrierausnehmungsabschnitte 74b1 und 74b2 voneinander ist bevorzugt kleiner als der radiale Abstand sb ihrer Umfangswandungen voneinander.

Auch die Zentrierausnehmung 74b verjüngt sich daher von ihrer dem Antriebsaxialende 32a näher gelegenen Längsende zum Innengewinde 74e hinDer Grad der Verjüngung der Zentrierausnehmung 74b nimmt mit zunehmenden axialen Abstand von ihrer dem Antriebsaxialende 32a näher gelegenen Mündung ab.

Gemäß einer in den Figuren 11A und 11B dargestellten bevorzugten Ausführungsform ist die Verjüngung der Zentrierausnehmung 74b bevorzugt dergestalt, dass ein erster virtueller Konus K3, welcher jeweils an den axial dem Antriebsaxialende 32a nächstgelegenen Rändern R1 des Haupt-Zentrierausnehmungsabschnitts 74b1 und R2 des Vor-Zentrierausnehmungsabschnitts 74b2 anliegt, einen größeren Öffnungswinkel γ auf als ein zweiter virtueller Konus K4, welcher zum einen an dem axial dem Antriebsaxialende 32a nächstgelegenen Rand R2 des Vor-Zentrierausnehmungsabschnitts 74b2 und zum anderen an einem dem Antriebsaxialende 32a nächstgelegenen Rand R3 eines auf den Vor-Zentrierausnehmungsabschnitt 74b2 axial in Einragrichtung des Zentrierzapfens 60a folgenden Radialabsatzes 74d1 der Zentrierausnehmung 74b oder der Durchgangsöffnung 74d anliegt, von welcher die Zentrierausnehmung 74b ein Teil ist. Der Öffnungswinkel des zweiten virtuellen Konus K4 ist in Figur 11b mit δ bezeichnet.

Im dargestellten Ausführungsbeispiel ist der Öffnungswinkel γ des ersten virtuellen Konus K3 geringfügig, etwa um zwischen 2° bis 7°, größer als der Öffnungswinkel α des oben beschriebenen ersten fiktiven Konus K1. Weiterhin ist der Öffnungswinkel δ des zweiten virtuellen Konus K4 geringfügig, etwa 2° bis 4°, kleiner als der Öffnungswinkel β des oben beschriebenen zweiten fiktiven Konus K2.

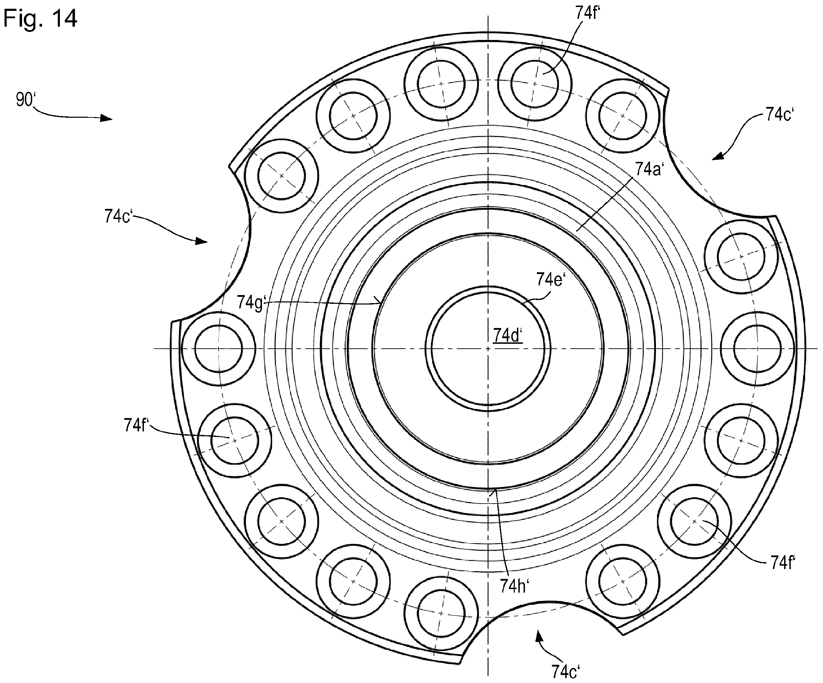

In den Figuren 13 und 14 ist eine modifizierte Ausführungsform des Lagerbauteils 90 dargestellt. Gleiche und funktionsgleiche Bauteile bzw. Bauteilabschnitte wie in den Figuren 11 und 12 weisen in den Figuren 13 und 14 gleiche Bezugszeichen auf, jedoch mit einem Apostroph versehen. Die modifizierte Ausführungsform der Figuren 13 und 14 wird nachfolgend nur insofern beschrieben werden, als sie sich von der Ausführungsform der Figuren 11 und 12 unterscheidet, auf deren Beschreibung ansonsten auch zur Erläuterung der Ausführungsform der Figuren 13 und 14 verwiesen wird.

Der Lagerzapfen 74a' des Lagerbauteils 90' weist in dem Axialabschnitt, welcher von dem dem Antriebsaxialende näheren Längsende 74h1' der zweiten zylindrischen Lagerfläche 74h' bis zum freien axialen Längsende 74k' reicht, qualitativ die gleiche Außengestalt auf wie der Lagerzapfen 74a des Lagerbauteils 90. Die zum Lagerzapfen 74a des Lagerbauteils 90 der Figuren 11 und 12 gemachten Aussagen treffen daher auch für den Lagerzapfen 74a' des Lagerbauteils 90' der Figuren 13 und 14 zu.

Auch die Zentrierausnehmung 74b' weist qualitativ die gleiche Gestalt auf, wie die Zentrierausnehmung 74b des Lagerbauteils 90 der Figuren 11 und 12. Auch hier gelten die zum Lagerbauteils 90 gemachten Aussagen unverändert für das Lagerbauteil 90'.

Ein wesentlicher Unterschied zwischen den Lagerbauteil 90 und 90' besteht darin, dass der Verbindungsflansch 74' des Lagerbauteils 90' einen kleineren Durchmesser und eine radiale Stufe 74m' aufweist.

Die radiale Stufe 74m' ist funktionell dem Vorsprung 74i des Lagerbauteils 90 ähnlich, unterscheidet sich jedoch deutlich hinsichtlich des Orts ihrer Anordnung. Zwischen dem Verbindungsflansch 74' und dem davon auskragenden Lagerzapfen 74a' ist daher am Lagerbauteil 90' kein Vorsprung 74i ausgebildet.

Durch die auf der dem Antriebsaxialende 32a näher gelegenen Seite des Verbindungsflanschs 74' ausgebildete radiale Stufe 74m' kann das Lagerbauteil 90', wie in Figur 13A dargestellt ist, in eine komplementär gestufte Ausnehmung des Verbindungsrings 70' derart eingesetzt werden, dass die dem Sicherungsaxialende 32b näher gelegene Stirnseite des Verbindungsflansches 74', von welchem der Lagerzapfen 74a' axial auskragt, bündig mit einer in gleicher Richtung weisenden Stirnseite des Verbindungsrings 70' angeordnet werden kann. Die radiale Stufe 74m' kann außerdem axial derart bemessen sein, dass auch das dem Antriebsaxialende 32a näher gelegene Längsende des Lagerbauteils 90' bündig mit der in die gleiche Richtung weisenden Stirnseite des Verbindungsrings 70' angeordnet ist.

Wegen der geringeren radialen Ausdehnung des Verbindungsflansches 74' sind die Ausnehmungen 74c' nicht vollständig im Lagerbauteil 90' ausgebildet, sondern sind dort lediglich als bogenförmige Teil-Ausnehmungen erkennbar, die erst mit entsprechenden komplementären Teil-Ausnehmungen im Verbindungsring 70' ergänzt eine vollständige Ausnehmung 74c bilden, in die ein Zapfen 80 der Antriebsformation 46 drehmomentübertragend eintragen kann.

Ebenfalls wegen der geringeren radialen Ausdehnung des Verbindungsflansches 74' liegen die Durchgangsöffnungen 74f' zur Befestigung des Lagerbauteils 90' am Verbindungsring 70' radial weiter innen, sodass sie nur abschnittsweise in Umfangsrichtung äquidistant voneinander angeordnet sind. Dort wo Teil-Ausnehmungen 74c' ausgebildet sind, sind keine Durchgangsöffnungen 74f' vorgesehen.

## Patentansprüche

1. Auswechselbare Fräswalze (32; 232) für eine Bodenbearbeitungsmaschine (10), wie Straßenfräse, Recycler, Stabilisierer oder Surface-Miner, welche sich axial zwischen einem Antriebsaxialende (32a) und einem dem Antriebsaxialende (32a) entgegengesetzten Sicherungsaxialende (32b; 232b) erstreckt und dazu ausgebildet ist, eine Antriebsformation (46; 246) der Bodenbearbeitungsmaschine (10) im betriebsbereit montierten Zustand radial außen zu umgeben, wobei die Fräswalze (32; 132; 232) durch eine im Bereich ihres Sicherungsaxialendes (32b; 232b) zugängliche zentrale Schraubanordnung (78; 278) mit zur zentralen Vorrichtungsachse (R) der Fräswalze (32; 232) kollinearer Schraubachse in ihrer betriebsbereiten Position gegen eine axiale Verlagerung sicherbar ist,
**dadurch gekennzeichnet, dass** in einem dem Sicherungsaxialende (32b; 232b) näher als dem Antriebsaxialende (32a) gelegenen Bereich ein Lagerzapfen (74a; 74a'; 274a) vorgesehen ist, welcher von einer ihn tragenden Auskragstruktur (74; 74'; 274) auskragt und sich in axialer Richtung verjüngend in Richtung vom Antriebsaxialende (32a) weg erstreckt, wobei der Lagerzapfen (74a; 74a'; 274a) bezüglich der zentralen Vorrichtungsachse (R) in axialem Abstand voneinander wenigstens zwei zylindrische Lagerflächen (74g, 74h; 74g', 74h') aufweist, welche im betriebsbereiten Zustand der Fräswalze (32; 232) von hohlzylindrischen Gegenlagerflächen eines bodenbearbeitungsmaschinenseitigen Loslagers (76; 276) spielfrei umgeben sind, wobei die axial weiter von der Auskragstruktur (74; 74'; 274) entfernt gelegene zylindrische Lagerfläche (74g; 74g') einen kleineren Durchmesser aufweist als die der Auskragstruktur (74; 74'; 274) axial näher gelegene zylindrische Lagerfläche (74h; 74h'),
oder/und
dass die Fräswalze (32; 232) an einem dem Sicherungsaxialende (32b; 132b; 232b) näher als dem Antriebsaxialende (32a) gelegenen Bereich eine zu einem formschlüssigen Zentriereingriff ausgebildete, starr mit der Fräswalze (32; 132; 232) verbundene Zentrierausnehmung (74b; 74b'; 274) aufweist, welche sich in Richtung vom Antriebsaxialende (32a) weg verjüngt, wobei die Zentrierausnehmung (74b; 74b'; 274) mit einem sich längs ihrer Verjüngung stufenweise verringernden Öffnungswinkel (γ, δ) ausgebildet ist.

2. Auswechselbare Fräswalze (32; 232) nach Anspruch 1,
**dadurch gekennzeichnet, dass** die Zentrierausnehmung (74b; 74b'; 274) an dem Lagerzapfen (74a; 74a'; 274a) ausgebildet ist.

3. Auswechselbare Fräswalze (32; 232) nach Anspruch 1 oder 2,
**dadurch gekennzeichnet, dass** die sich axial verjüngende Ausbildung des Lagerzapfens (74a; 74a') dergestalt ist, dass der Öffnungswinkel (α, β) von zwei fiktiven einhüllenden Konussen (K1, K2), welche jeweils an zwei mit axialem Abstand voneinander gelegenen Schmiegekreisen (S1, S2, S3, S4) auf der Oberfläche des Lagerzapfens (74a; 74a') tangential anliegen und einen zwischen den Schmiegekreisen (S1, S2, S3, S4) gelegenen Axialabschnitt des Lagerzapfens (74a; 74a') umgeben, für Konusse (K2) von näher an der Auskragstruktur (74, 74') gelegenen Schmiegekreispaaren (S3, S4) kleiner ist.

4. Auswechselbare Fräswalze (32; 232) nach Anspruch 3,
**dadurch gekennzeichnet, dass** der Öffnungswinkel (α) eines ersten fiktiven Konus (K1), dessen erster, von der Auskragstruktur (74; 74') weiter entfernt gelegener Schmiegekreis (S1) an dem von der Auskragstruktur (74; 74') entfernt gelegenen freien axialen Längsende (74k; 74k') gelegen ist und dessen zweiter, der Auskragstruktur (74; 74') näher gelegener Schmiegekreis (S2) axial zwischen dem ersten Schmiegekreis (S1) und dem dem freien Lagerzapfen-Längsende (74k; 74k') näher gelegenen axialen Längsende (74g2; 74g2') der ersten zylindrischen Lagerfläche (74g; 74g') gelegen ist, wenigstens das 1,5-fache, bevorzugt wenigstens das 2,5-fache des Öffnungswinkels (β) eines zweiten fiktiven Konus (K2) beträgt, dessen erster, von der Auskragstruktur (74; 74') weiter entfernt gelegener Schmiegekreis (S3) an dem dem freien Lagerzapfen-Längsende (74k; 74k') näher gelegenen axialen Längsende (74g2; 74g2') der ersten zylindrischen Lagerfläche (74g; 74g') gelegen ist.

5. Auswechselbare Fräswalze (32; 232) nach Anspruch 4,
**dadurch gekennzeichnet, dass** der Öffnungswinkel des zweiten fiktiven Konus 5° bis 15°, besonders bevorzugt 8° bis 13° beträgt.

6. Auswechselbare Fräswalze (32; 232) nach einem der Anspruch vorhergehenden Ansprüche,
**dadurch gekennzeichnet, dass** die Zentrierausnehmung (74b; 74b'; 274) einen näher beim Antriebsaxialende (32a) gelegenen Haupt-Zentrierausnehmungsabschnitt (74b1; 74b1') und einen weiter von dem Antriebsaxialende (32a) entfernt gelegenen Vor-Zentrierausnehmungsabschnitt (74b2; 74b2') aufweist, wobei ein erster virtueller Konus (K3), welcher jeweils an den axial dem Antriebsaxialende (32a) nächstgelegenen Rändern (R1, R2) des Haupt-Zentrierausnehmungsabschnitts (74b1; 74b1') und des Vor-Zentrierausnehmungsabschnitts (74b2; 74b2') anliegt, einen größeren Öffnungswinkel (γ) aufweist als ein zweiter virtueller Konus (K4), welcher zum einen an dem axial dem Antriebsaxialende (32a) nächstgelegenen Rand (R2) des Vor-Zentrierausnehmungsabschnitts (74b2; 74b2') und zum anderen an einem dem Antriebsaxialende nächstgelegenen Rand (R3) einer auf den Vor-Zentrierausnehmungsabschnitt (74b2; 74b2') axial in Richtung vom Antriebsaxialende (32a) weg folgenden Ausnehmung (74d; 74d') anliegt, von welcher die Zentrierausnehmung (74b; 74b') ein Teil ist.

7. Auswechselbare Fräswalze (32; 232) nach Anspruch 6,
**dadurch gekennzeichnet, dass** der Öffnungswinkel (γ) des ersten virtuellen Konus (K3) etwa 3 bis 6 mal, besonders bevorzugt 4 bis 5 mal größer ist als der Öffnungswinkel (δ) des zweiten virtuellen Konus (K4).

8. Auswechselbare Fräswalze (32; 232) nach Anspruch 6 oder 7,
**dadurch gekennzeichnet, dass** der Öffnungswinkel (γ) des ersten virtuellen Konus (K3) zwischen 20° und 40°, besonders bevorzugt zwischen 25° und 35° beträgt.

9. Auswechselbare Fräswalze (32; 232) nach einem der Ansprüche 6 bis 8, unter Einbeziehung des Anspruchs 4,
**dadurch gekennzeichnet, dass** der Öffnungswinkel (γ) des ersten virtuellen Konus (K3) größer ist als der Öffnungswinkel (α) des oben beschriebenen ersten fiktiven Konus (K1).

10. Auswechselbare Fräswalze (32; 232) nach einem der Ansprüche 6 bis 9, unter Einbeziehung des Anspruchs 4,
**dadurch gekennzeichnet, dass** der Öffnungswinkel (δ) des zweiten virtuellen Konus (K4) kleiner ist als der Öffnungswinkel (β) des oben beschriebenen zweiten fiktiven Konus (K2).

## Claims

1. A replaceable milling drum (32; 232) for an earth working machine (10) such as a road milling machine, recycler, stabilizer, or surface miner, which extends between a drive axial end (32a) and a retention axial end (32b; 232b) located oppositely from the drive axial end (32a) and is embodied to radially externally surround a drive configuration (46; 246) of the earth working machine (10) in the operationally mounted state, the milling drum (32; 132; 232) being retainable in its operational position, against axial displacement, by a central bolt arrangement (78; 278), accessible in the region of its retention axial end (32b; 232b), having a bolt axis collinear with the central apparatus axis (R) of the milling drum (32; 232),
**characterized in that** a bearing stem (74a; 74a'; 274a) is located in a region closer to the retention axial end (32b; 232b) than to the drive axial end (32a) being provided, which stem protrudes from a protrusion structure (74; 74'; 274) carrying it and extends in an axial direction taperingly in a direction away from the drive axial end (32a), the bearing stem (74a; 74a'; 274a) comprising at least two cylindrical bearing surfaces (74g, 74h; 74g', 74h') at an axial distance from one another with respect to the central apparatus axis (R), which, with the milling drum (32; 232) in the operational state, are surrounded with zero clearance by hollow-cylindrical counterpart bearing surfaces of an earth working machine-side non-locating bearing (76; 276), the cylindrical bearing surface (74g; 74g') located axially farther from the protrusion structure (74; 74'; 274) having a smaller diameter than the cylindrical bearing surface (74h; 74h') located axially closer to the protrusion structure (74; 74'; 274), and/or
**in that** the milling drum (32; 232) comprises, at a region located closer to the retention axial end (32b; 132b; 232b) than to the drive axial end (32a), a centering recess (74b; 74b'; 274), embodied for positive centering engagement and connected rigidly to the milling drum (32; 132; 232), which tapers in a direction away from the drive axial end (32a), the centering recess (74b; 74b'; 274) being embodied with an opening angle (γ, δ) that decreases in steps along its taper.

2. The replaceable milling drum (32; 232) according to claim 1,
**characterized in that** the centering recess (74b; 74b'; 274) is embodied on the bearing stem (74a; 74a'; 274a).

3. The replaceable milling drum (32; 232) according to subject claim 1 or 2,
**characterized in that** the axially tapering conformation of the bearing stem (74a; 74a') is such that the opening angle (α, β) of two notional enveloping cones (K1, K2), which respectively abut tangentially against two osculating circles (S1, S2, S3, S4) located with an axial spacing from one another on the surface of bearing stem (74a; 74a') and surround an axial portion, located between the osculating circles (S1, S2, S3, S4), of the bearing stem (74a' 74a'), is smaller for cones (K2) of osculating circle pairs (S3, S4) located closer to the protrusion structure (74, 74').

4. The replaceable milling drum (32; 232) according to claim 3,
**characterized in that** the opening angle (α) of a first notional cone (K1), whose first osculating circle (S1), located farther from the protrusion structure (74; 74'), is located at the axial longitudinal end (74k; 74k') located remotely from the protrusion structure (74; 74'), and whose second osculating circle (S2), located closer to the protrusion structure (74; 74'), is located axially between the first osculating circle (S1) and that axial longitudinal end (74g2; 74g2') of the first cylindrical surface (74g; 74g') which is located closer to the free bearing stem longitudinal end (74k; 74k'), is at least 1.5 times, preferably at least 2.5 times as large as the opening angle (β) of a second notional cone (K2) whose first osculating circle (S3), located farther from the protrusion structure (74; 74'), is located at that axial longitudinal end (74g2; 74g2') of the first cylindrical bearing surface (74g; 74g') which is located closer to the free bearing stem longitudinal end (74k; 74k').

5. The replaceable milling drum (32; 232) according to claim 4,
**characterized in that** the opening angle of the second notional cone is equal to 5° to 15°, particularly preferably 8° to 13°.

6. The replaceable milling drum (32; 232) according to one of the preceding claims,
**characterized in that** the centering recess (74b; 74b'; 274) comprises a main centering recess portion (74b1; 74b1') located closer to the drive axial end (32a) and a pre-centering recess portion (74b2; 74b2') located farther from the drive axial end (32a), such that a first virtual cone (K3) that abuts respectively against the edges (R1, R2), located axially closest to the drive axial end (32a), of the main centering recess portion (74b1; 74b1') and of the pre-centering recess portion (74b2; 74b2') has a larger opening angle (γ) than a second virtual cone (K4) that abuts on the one hand against the edge (R2), located axially closest to the drive axial end (32a), of the pre-centering recess portion (74b2; 74b2') and on the other hand against an edge (R3), located closest to the drive axial end, of a recess (74d; 74d') that axially follows the pre-centering recess portion (74b2; 74b2') in a direction away from the drive axial end (32a) and of which the centering recess (74b; 74b') is a part.

7. The replaceable milling drum (32; 232) according to claim 6,
**characterized in that** the opening angle (γ) of the first virtual cone (K3) is approximately 3 to 6 times, particularly preferably 4 to 5 times, larger than the opening angle (δ) of the second virtual cone (K4).

8. The replaceable milling drum (32; 232) according to claim 6 or 7,
**characterized in that** the opening angle (γ) of the first virtual cone (K3) is equal to between 20° and 40°, particularly preferably between 25° and 35°.

9. The replaceable milling drum (32; 232) according to one of claims 6 to 8, including claim 4,
**characterized in that** the opening angle (γ) of the first virtual cone (K3) is larger than the opening angle (α) of the first notional cone (K1) described above.

10. The replaceable milling drum (32; 232) according to one claims 6 to 9, including claim 4,
**characterized in that** the opening angle (δ) of the second virtual cone (K4) is smaller than the opening angle (β) of the second notional cone (K2) described above.

## Revendications

1. Tambour de fraisage interchangeable (32; 232) pour une machine de travail du sol (10), telle qu'une fraiseuse routière, un recycleur, un stabilisateur ou un Surface Miner, le tambour de fraisage (32; 232) s'étendant axialement entre une extrémité axiale d'entraînement (32a) et une extrémité axiale de fixation (32b; 232b) opposée à l'extrémité axiale d'entraînement (32a) et étant adaptée pour entourer une formation d'entraînement (46; 246) de la machine de traitement du sol (10) radialement à l'extérieur lorsque celle-ci est montée dans son état de fonctionnement, le tambour de fraisage (32; 132; 232) pouvant dans sa position de fonctionnement être bloqué contre un déplacement axial par un dispositif de vissage central (78; 278) accessible dans la région de son extrémité axiale de fixation (32b; 232b) avec un axe de vissage colinéaire par rapport à l'axe central (R) du tambour de fraisage (32, 232), **caractérisé en ce qu'**un tourillon (74a; 74a'; 274a) est prévu dans une zone située plus proche de l'extrémité axiale de fixation (32b; 232b) que de l'extrémité axiale d'entraînement (32a) qui s'étend en saillie d'une structure de saillie (74; 74'; 274a) le portant et s'étend en se rétrécissant dans une direction axiale s'éloignant de l'extrémité axiale d'entraînement (32a), le tourillon (74a; 74a'; 274a) comprenant par rapport à l'axe central (R) du dispositif au moins deux surfaces d'appui cylindriques (74g, 74h; 74g', 74h') espacés axialement qui, dans l'état de fonctionnement du tambour de fraisage (32; 232), sont entourées par des contre-surfaces d'appui cylindriques creuses d'un palier libre (76; 276) du côté de la machine de traitement du sol sans aucun jeu, la surface d'appui cylindrique (74g; 74g') située axialement plus éloignée de la structure de saillie (74; 74'; 274) ayant un diamètre plus petit que la surface d'appui cylindrique (74h; 74h') située axialement plus proche de la structure de saillie (74; 74'; 274),
ou/et
**en ce que** le tambour de fraisage (32; 232), dans une zone située plus proche de l'extrémité axiale de fixation (32b; 132b; 232b) que de l'extrémité axiale d'entraînement (32a), présente un évidement de centrage (74b; 74b'; 274) adapté sous forme d'engagement de centrage par ajustement positif et connecté rigidement au tambour de fraisage (32; 132; 232), se rétrécissant en s'éloignant de l'extrémité axiale d'entraînement (32a), ledit évidement de centrage (74b; 74b'; 274) étant formé avec un angle d'ouverture (Υ, δ) qui diminue graduellement le long de son rétrécissement.

2. Tambour de fraisage remplaçable (32; 232) selon la revendication 1,
**caractérisé en ce que** l'évidement de centrage (74b; 74b'; 274) est adapté au tourillon (74a; 74a'; 274a).

3. Tambour de fraisage remplaçable (32; 232) selon la revendication 1 ou 2,
**caractérisé en ce que** la forme du tourillon qui se rétrécit axialement (74a; 74a') est de telle sorte que l'angle d'ouverture (α, β) de deux cônes enveloppants fictifs (K1, K2), dont chacun est en appui tangentiel sur deux cercles de courbure (S1, S2, S3, S4) espacés axialement sur la surface du tourillon (74a; 74a') et entoure une partie axiale du tourillon (74a; 74a') situé entre les cercles de courbure (S1, S2, S3, S4), est plus petit dans le cas de cônes (K2) de paires de cercles de courbure (S3, S4), situés plus proche de la structure de saillie (74, 74').

4. Tambour de fraisage remplaçable (32; 232) selon la revendication 3,
**caractérisé en ce que** l'angle d'ouverture (α) d'un premier cône fictif (K1), dont le premier cercle de courbure (S1), situé plus éloigné de la structure de saillie (74; 74'), est situé à l'extrémité axiale libre éloignée de la structure de saillie (74; 74') et dont le second cercle de courbure (S2), situé plus proche de la structure de saillie (74; 74'), est situé axialement entre le premier cercle de courbure (S1) et l'extrémité longitudinale axiale (74g2; 74g2') plus proche de l'extrémité longitudinale libre du tourillon (74k; 74k') de la première surface d'appui cylindrique (74g; 74g'), est au moins 1,5 fois, de préférence au moins 2,5 fois, l'angle d'ouverture (β) d'un second cône fictif (K2), dont le premier cercle de courbure (S3), situé plus éloigné de la structure de saillie (74; 74'), est situé à l'extrémité longitudinale axiale (74g2; 74g2') plus proche de l'extrémité longitudinale libre du tourillon (74k; 74k') de la première surface d'appui cylindrique (74g; 74g').

5. Tambour de fraisage remplaçable (32; 232) selon la revendication 4,
**caractérisé en ce que** l'angle d'ouverture du deuxième cône fictif est de 5° à 15°, de manière particulièrement préférée de 8° à 13°.

6. Tambour de fraisage remplaçable (32; 232) selon l'une des revendications précédentes,
**caractérisé en ce que** l'évidement de centrage (74b; 74b'; 274) comprend une partie d'évidement de centrage principale (74b1; 74b1') située plus proche de l'extrémité axiale d'entraînement (32a) et une partie d'évidement de pré-centrage (74b2; 74b2') située plus éloignée de l'extrémité axiale d'entraînement (32a), où un premier cône virtuel (K3), qui est respectivement adjacent aux bords (R1, R2) de la partie d'évidement de centrage principale (74b1; 74b1') et de la partie d'évidement de pré-centrage (74b2; 74b2') axialement les plus proches de l'extrémité axiale d'entraînement (32a), présente un angle d'ouverture (Y) plus grand qu'un deuxième cône virtuel (K4) qui, d'une part, est adjacent au bord (R2) de la partie d'évidement de pré-centrage (74b2; 74b2') axialement le plus proche de l'extrémité axiale d'entraînement (32a) et d'autre part à un bord (R3) le plus proche de l'extrémité axiale d'entraînement (32a) d'un évidement (74d; 74d') suivant axialement à la partie d'évidement de pré-centrage (74b2; 74b2') dans la direction opposée de l'extrémité axiale d'entraînement (32a) dont l'évidement de centrage (74b; 74b') fait partie.

7. Tambour de fraisage remplaçable (32; 232) selon la revendication 6,
**caractérisé en ce que** l'angle d'ouverture (y) du premier cône virtuel (K3) est environ 3 à 6 fois plus grand, de manière particulièrement préférée 4 à 5 fois plus grand que l'angle d'ouverture (δ) du deuxième cône virtuel (K4).

8. Tambour de fraisage remplaçable (32; 232) selon la revendication 6 ou 7,
**caractérisé en ce que** l'angle d'ouverture (y) du premier cône virtuel (K3) est compris entre 20° et 40°, de manière particulièrement plus préférée entre 25° et 35°.

9. Tambour de fraisage remplaçable (32; 232) selon l'une des revendications 6 à 8, y compris la revendication 4,
**caractérisé en ce que** l'angle d'ouverture (y) du premier cône virtuel (K3) est plus grand que l'angle d'ouverture (α) du premier cône fictif (K1) décrit ci-dessus.

10. Tambour de fraisage remplaçable (32; 232) selon l'une des revendications 6 à 9, y compris la revendication 4,
**caractérisé en ce que** l'angle d'ouverture (δ) du deuxième cône virtuel (K4) est plus petit que l'angle d'ouverture (β) du deuxième cône fictif (K2) décrit ci-dessus.
